# EUROPEAN PATENT SPECIFICATION

(11) **EP 4 246 040 B1**
(45) Date of publication and mention of the grant of the patent: **07.05.2025**
(21) Application number: 23159568.7
(22) Date of filing: 02.03.2023
(51) Int. Cl.: F23C 10/10, F23C 10/26, F23C 10/30, F23G 5/30, F23J 7/00, F23G 5/48, B01D 53/50, B01D 53/68, B01D 53/83, F22B 31/00

(54) **CIRCULATING FLUIDIZED BED BOILER AND A METHOD FOR OPERATING A CIRCULATING FLUIDIZED BED BOILER**
ZIRKULIERENDER WIRBELBETTKESSEL UND VERFAHREN ZUM BETRIEB EINES ZIRKULIERENDEN WIRBELBETTKESSELS
CHAUDIÈRE À LIT FLUIDISÉ CIRCULANT ET PROCÉDÉ DE FONCTIONNEMENT D'UNE CHAUDIÈRE À LIT FLUIDISÉ CIRCULANT

(30) Priority: 16.03.2022 FI 20225235
(43) Date of publication of application: 20.09.2023
(73) Proprietor: Valmet Technologies Oy, 02150 Espoo (FI)
(72) Inventor: MAUNULA, Joni, 33900 Tampere (FI); SILVENNOINEN, Jaani, 33900 Tampere (FI)
(74) Representative: Berggren Oy

(56) References cited:
- WO-A1-2019/086752
- CN-A- 107 970 725
- US-B1- 6 649 135

## Description

### Technical field

The invention relates to fluidized bed boilers of the circulating type. The invention relates to methods for operating a circulating fluidized bed boilers. The invention relates to methods for reducing corrosion of fluidized bed heat exchangers.

### Background

Boilers are used to produce steam by burning fuel. The steam can be used for heating and/or for producing mechanical energy in a turbine, which may be converted to electricity. In combustion, some compounds of the fuel are released or reacted to produce flue gas. Some compounds of the flue gas corrode the heat transfer surfaces of the boiler, which reduces service life and increases maintenance needs.

To this end, it is known that the corrosive compounds are most corrosive at a certain temperature window in a molten form. Thus, to avoid corrosion, a surface temperature of a heat transfer tube can be, in some cases, arranged to be above a higher critical temperature or below a lower critical temperature. Such critical temperatures may be e.g. about 450 °C and about 750 °C, respectively. However, precise values of these critical temperatures depend on the composition of the flue gas, which depends on the fuel that is used. To further reduce corrosion, it is known to apply different types of coatings onto heat transfer surfaces.

However, nowadays the needed steam temperature has gone up, and the content of the fuel has changed so as to form such compounds, mainly alkali chlorides, that are comprised in the smelt form on heat transfer surfaces in typical use. Particularly some types of fuel comprises a lot of chlorine, which seems to pose corrosion problems. Therefore, other solutions are required in addition or alternatively.

In this field, the document US 6,649,135 B, on which the two-part-form of the independent claims is based, discloses burning or gasifying material containing combustible components in a circulating fluidized bed comprising a turbulence chamber, a solids separator, and a cooling device for the indirect cooling of solids arriving from the solids separator. A first fluidized bed of the cooling device, into which the hot solids arriving from the solids separator are introduced first, is situated in a dechlorinating chamber. Fluidizing gas and at least one of the following dechlorinating additives: a) gaseous SO₂ or a material which contains sulfur and releases SO₂ in an oxidizing atmosphere, b) silicates and aluminium silicates, c) activated silicate, or d) other alkali-binding and HCl-releasing additives, are also introduced into the dechlorinating chamber in at least stoichiometric quantities so as to convert the alkali and metal chlorides contained in the arriving solids.

Moreover, the document WO 2019/086752 A1 discloses a method of and a system for maintaining steam temperature and therefore electricity production efficiency with decreased loads of a steam turbine power plant comprising a fluidized bed boiler and a fluidized bed superheater. In that solution, the steam temperature may be maintained by providing, outside a furnace, additional heating to the fluidized bed material in its outer circulation, thereby increasing the amount of thermal energy available in the fluidized bed material.

In addition, the document CN 107970725 A discloses an exhaust gas recirculation system, which comprises a circulating fluidized bed boiler. The recirculation system is connected to a draught fan, the draught fan is connected to a dust remover, the dust remover is connected to a chimney through a desulfurizer, and a cooling circulation system is arranged on the bottom of the circulating fluidized bed boiler.

### Summary

It has been found that corrosion can be reduced by feeding sulphur-containing reagent to the process. The sulphur-containing reagent may be e.g. elementary sulphur or in a form of a sulphate. However, in line with the background, it has also been found that sulphur-containing reagent needs not be fed to such heat exchange surfaces that a reasonably cool, i.e. so cool that the alkali chlorides are not in a form of a smelt therein. Moreover, it has been found that when high-temperature steam needs to be produced, the high-temperature superheater(s) can be arranged to such a location in which there is only a minor amount of the corrosive components. Thus, a lesser amount of sulphur-containing reagent is needed compared to feeding to some other locations. It has been found that in a circulating fluidized bed boiler, such a location is arranged after a particle separator, which separates a flue gas fraction and a bed material fraction; whereby most of the corrosive components flow with the flue gas fraction. Correspondingly the bed material fraction comprises only a minor amount of the corrosive compounds. Therefore, the high-temperature heat exchanger (hereinafter a first heat exchanger) is configured to recover heat from the bed material fraction, and the sulphur-containing reagent is fed upstream from a heat transfer tube of the first heat exchanger, to the bed material fraction (i.e. downstream from the separation of the bed material fraction). At such a location only a minor amount of corrosive compounds would be present without the sulphur addition, because of the separation of the flue gas fraction, and with the sulphur addition, the amount of corrosive compounds decreases even further.

The invention is disclosed in more specific terms in the independent claims 1 and 9. Preferable embodiments are disclosed in dependent claims. These and other embodiments are explained and disclosed in the description and the figures.

### Brief description of the drawings

- Fig. 1: shows a circulating fluidized bed boiler and feeding sulphur-containing reagent to the circulating fluidized bed boiler,
- Fig. 2a: shows a circulating fluidized bed boiler having a loopseal and feeding sulphur-containing reagent to the circulating fluidized bed boiler,
- Fig. 2b: shows a circulating fluidized bed boiler having a loopseal and feeding sulphur-containing reagent to the circulating fluidized bed boiler,
- Fig. 3a: shows a circulating fluidized bed boiler having other heat exchangers and circulation of heat transfer medium therein,
- Fig. 3b: shows a circulating fluidized bed boiler having other heat exchangers and circulation of heat transfer medium,
- Fig. 3c: shows a circulating fluidized bed boiler having other heat exchangers and circulation of heat transfer medium,
- Fig. 4: shows a circulating fluidized bed boiler connected to a sulphur removal device, such as a scrubber,
- Fig. 5: shows another circulating fluidized bed boiler and feeding sulphur-containing reagent to the circulating fluidized bed boiler,
- Fig. 6: shows a circulating fluidized bed boiler having two particle separators in a cascade,
- Fig. 7: shows a cross section of a heat transfer tube having an inner tube, an outer tube, and insulator in between,
- Fig. 8a: shows in a side view a circulating fluidized bed boiler having a loopseal heat exchanger with a bypass and feeding sulphur-containing reagent to the loopseal heat exchanger, and
- Fig. 8b: shows in a top view the loopseal heat exchanger of Fig. 8a and feeding sulphur-containing reagent to the loopseal heat exchanger.

### Detailed description

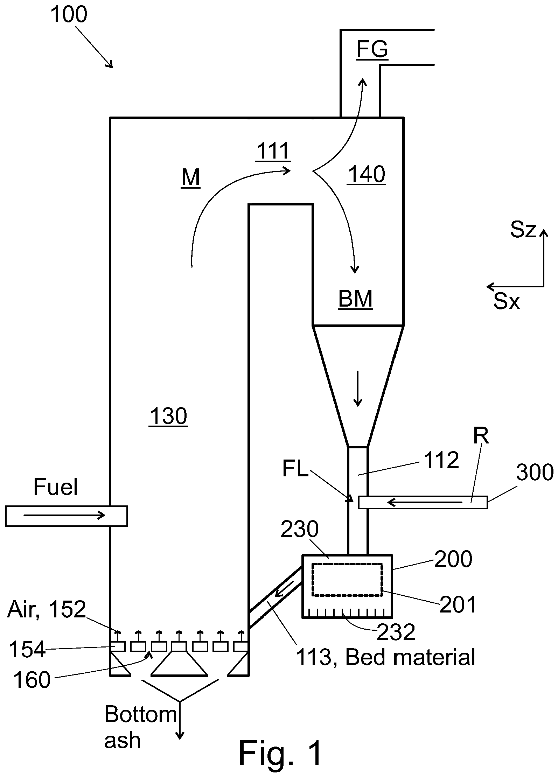

Figure 1 shows a fluidized bed boiler 100. The fluidized bed boiler is of the circulating type. Even when not in use, such a fluidized bed boiler may be called a circulating fluidized bed boiler. A purpose of a boiler is to recover heat and to produce steam. Therefore, the circulating fluidized bed boiler comprises a first heat exchanger 200 comprising a heat exchanger tube 201. In use, heat transfer medium (in an embodiment water/steam) is fed into the heat exchanger tube 201 and heat received by an outer surface of the heat exchanger tube 201 is transferred to the heat transfer medium. In this way, heat is recovered to the heat transfer medium.

The heat that is recovered is produced by combustion. Therefore, fuel and air are fed to a furnace 130 of the circulating fluidized bed boiler 130. In addition, bed material is fed to the furnace 130. Bed material may be supplied from a return channel 113; and in addition additional bed material may be added e.g. with the fuel and/or to the return channel 113 and/or through other means (not shown).

Fluidizing air is supplied through nozzles 152 to the furnace. In a circulating fluidized bed boiler 100 so much air is supplied that the fuel and the bed material fluidizes, and they flow, with the air, as a mixture M comprising the air, fuel, and bed material towards a particle separator 140. Typically, the mixture M flows in the furnace 130 substantially upwards. In Fig. 1, the direction Sz is upwards, i.e. reverse to gravity. Because the furnace 130 is hot, the fuel burns thereby producing heat, ash, and flue gas. Thus, in the furnace 130, the mixture M comprises at least bed material and gas (air and/or flue gas). The directions Sx and Sy are perpendicular to Sz and to each other.

In Fig. 1, the air is fed to the nozzles 152 through windboxes 154. In Fig. 1, in between the windboxes 154, channels 160 for removing bottom ash are arranged. Bottom ash may be removed through the channels 160 in use, because otherwise the ash resulting from combustion accumulates to the bed material. However, bottom ash may be removed in addition or in the alternative from the heat exchanger 200 (such ash removal not shown in Fig. 1).

The particle separator 140 is configured to separate from the mixture M, which comprises at least bed material and flue gas, both a bed material fraction BM and a flue gas fraction FG. The flue gas fraction FG is conveyed (optionally through cleaning phases) eventually to a chimney. The bed material fraction BM is circulated back to the furnace 130. However, as detailed below, heat is recovered from at least part of the bed material fraction BM using the first heat exchanger 200. The bed material as well as the bed material fraction BM comprises solid particulate material that is heat resistant, such as sand. In use, at least a part of a bed material fraction BM is guided to (i.e. onto) the heat exchanger tube 201 so that heat is recovered from the part of the bed material fraction.

As detailed in the background, burning the fuel results in such flue gases that are corrosive at least within a certain temperature window. It has been found that typically alkali chlorides are very corrosive at a temperature window of about 450 °C to about 700 °C or even up to 750 °C. A rate of corrosion depends also on a content of the corrosive compounds in the flue gases. Thus, when a steam temperature inside the heat exchanger tube is more than 400 °C (e.g. around 500 °C) and the environment is hotter, such conditions easily occur on outer surface of the heat exchanger tube 201. Moreover, even if at a higher temperature the corrosiveness goes down, the gases may be somewhat corrosive. Thus, reducing corrosion also by other means is needed at least at such locations.

It has been found that alkali chlorides can be captured by feeding sulphur. More precisely, the alkali chlorides react with sulphur oxide (SOx) to form alkali sulphate, which is less corrosive than alkali chloride. Some of the relevant reactions can be expressed as:

2M^{a}Cl + SO₂ + ½O₂ + H₂O → M^{a}₂SO₄ + 2 HCl (1)

2M^{a}Cl + SO₃ + H₂O → M^{a}₂SO₄ + 2 HCl (2)

, wherein M^{a} is an alkali ion (e.g. Na or K).

In the hot environment of the furnace, substantially all sulphur-containing materials react with oxygen to form SO₂ (or other SOx), which is needed in the reaction (see the reaction above). Moreover, the alkali sulphate M^{a}₂SO₄ is much less corrosive than the alkali chloride M^{a}Cl. Moreover, the hydrogen chloride is in the gaseous form, whereby it also is not corrosive.

Feeding large amounts of sulphur is expensive and results in other problems, mainly the production of excess sulphur oxides. The inventors have found that most of the corrosive alkali chlorides do not enter the bed material fraction BM, because the most of the alkali chlorides flow with the flue gas fraction FG away from the heat exchanger tube 201 (see Fig. 1). Thus, if the first heat exchanger 200 in which the steam temperature is high (see above) is configured to recover heat from the only bed material fraction BM (or a part thereof), the sulphur-containing reagent R can be fed to the bed material fraction BM, from which most of the flue gas have been removed by the particle separator. However, the sulphur-containing reagent R should be fed upstream from the furnace 130, because in the furnace 130, flue gases are generated again. Thus, to convert the chloride to the sulphate before the heat exchanger tube 201 of the first heat exchanger, the sulphur-containing reagent R is fed upstream from the heat exchanger tube 201.

It is noted that, not according to the invention, as an alternative to a sulphur-containing reagent R, from the technical point of view aluminium silicates also are capable of reducing corrosion problems. Thus, not according to the invention, as an alternative to sulphur-containing reagent R, a reagent comprising only aluminium silicates can be fed using the same principles as detailed in this description. However, the inventors have noticed that a sulphur-containing reagent R functions much better, and the operational costs remain at a much lower level when a sulphur-containing reagent R is used instead of aluminium silicates. However, the sulphur-containing reagent R of the present invention may comprise, in addition to a sulphur compound, e.g. aluminium silicate.

Hereinbelow, unless otherwise indicated, the terms "upstream" and "downstream" refer to the bed material circulation defined by the following components of the fluidized bed boiler: the particle separator 140, the first heat exchanger 200, and the furnace. The bed material (or a part thereof) flows from the particle separator 140 to the first heat exchanger 200; from the first heat exchanger 200 to the furnace 130; and from the furnace 130 to the particle separator 140 (see Figs. 1 to 6). As will be detailed below, downstream from the particle separator, a splitting chamber may divide the bed material fraction BM to a first part and a second part such that only the first part is conveyed to the heat exchanger tube 201, while the second part bypasses the heat exchanger tube 201.

Moreover, because of the role of alkali chlorides, the method is particularly useful when such a fuel that has a high content of chlorine is burnt. Typically fuels derived from residue comprise a lot of chlorine. Correspondingly, the method and the fluidized bed boiler 100 are particularly useful with such a fuel. Thus, in an embodiment of the method, the fuel comprises a component derived from residue. In an embodiment, the fuel comprises biodegradable material and/or plastic material. In an embodiment, the fuel comprises at least one of refuse derived fuel (RDF), recovered fuel (REF), and solid recovered fuel (SRF). Correspondingly, in an embodiment, the fluidized bed boiler 100 comprises means for feeding such fuel that has been derived from residue into the furnace 130.

Thus, an embodiment of a method for operating a circulating fluidized bed boiler comprises feeding air ("Air" in Fig. 1), fuel ("Fuel" in Fig 1), and bed material ("Bed material" in Fig. 1) to a furnace 130 of the circulating fluidized bed boiler 100 and combusting the fuel in the furnace 130. As a result of the combustion, flue gas is produced. The method comprises conveying a mixture M comprising the flue gas and the bed material from the furnace 130 to a particle separator 140 and separating from the mixture M both (i) a bed material fraction BM and (ii) a flue gas fraction FG. The bed material fraction BM and the flue gas fraction FG are separated with the particle separator 140. The method comprises conveying at least a part of the bed material fraction BM from the particle separator to a first heat exchanger 200 comprising a heat exchanger tube 201, and recovering heat from the at least part of the bed material fraction BM with the heat exchanger tube 201. As indicated above, the heat exchanger tube 201 is arranged upstream from the furnace 130. More specifically, the heat exchanger tube 201 is arranged upstream from the furnace 130 in the direction of bed material flow, but not further upstream from the furnace 130 than the particle separator 140. In other words, the heat exchanger tube 201 is arranged, in the direction of flow of the bed material fraction in the bed material circulation between the particle separator 140 and the furnace 130 to such a location that a distance between heat exchanger tube 201 and the particle separator 140 is less than a distance between the furnace 130 and the particle separator 140, wherein the distances are measured along a path that starts from the particle separator 140, runs from the particle separator 140 along the path the bed material flows, and ends to the particle separator 140 after one full round.

As shown in Fig. 1, the transfer tube 201 is arranged upstream from the furnace 130 and downstream from the particle separator 140. Moreover, in the direction of flow of the bed material fraction in the bed material circulation, the the heat exchanger tube 201 is arranged between the particle separator 140 and the furnace 130. However, the heat exchanger tube 201 is not arranged in the primary first channel 111, which is arranged upstream from the particle separator. Therefore, the heat exchanger tube 201 is arranged to such a location as discussed above. E.g. in Fig. 1 the distance of the heat exchanger tube 201 from the particle separator 140 is about 1/6 of a full round. However, a distance of the furnace 130 from the particle separator 140 (as defined above) is about a third of a full round. Moreover, if the heat exchanger tube was arranged in the primary first channel 111 after the furnace 130, the distance would be at least 5/6 of a full round.

In line with these measures, the heat exchanger tube 201 is arranged upstream from the furnace 130 in the direction of bed material flow, but not further upstream from the furnace 130 than the particle separator 140.

When the flue gas fraction FG and the bed material fraction are separated from the mixture M, typically only about 1 % to 5 % of the flue gases flow with bed material fraction BM. This indicates why it is much more efficient to feed the reagent R to the material fraction BM than e.g. to the furnace 130 or to the flue gas fraction FG.

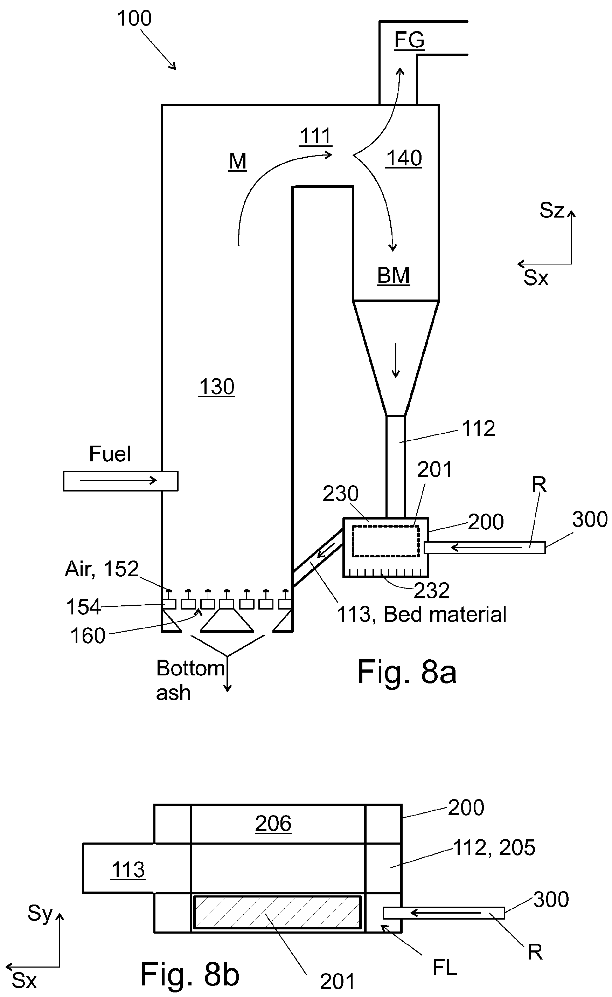

An embodiment of the method comprises conveying only a part of the bed material fraction BM from the particle separator 140 to heat exchanger tube 201. In this case, the other part may be conveyed through a bypass 206 (see Fig. 8b). However, in an embodiment and/or at least at certain point of time, an embodiment comprises conveying all the bed material fraction BM from the particle separator 140 to a heat exchanger comprising the heat exchanger tube 201.

An embodiment of the method comprises conveying only a part of the bed material fraction BM from the heat exchanger tube 201 to the furnace 130. In this embodiment, another part of the bed material fraction BM may be removed from the circulation e.g. from the heat exchanger 200 e.g. to a bottom ash cooler for further processing (not shown). An embodiment of the method comprises conveying the whole bed material fraction BM from the heat exchanger tube 201 to the furnace 130. In this embodiment, a part of the bed material (i.e. the bottom ash) may be removed from the furnace 130 as detailed above.

To convert the alkali chlorides to alkali sulphates upstream from the heat exchanger tube 201, the method comprises feeding the sulphur-containing reagent R to the bed material fraction BM upstream from the heat exchanger tube 201. More specifically, the method comprises feeding the sulphur-containing reagent R to the bed material fraction BM upstream from the heat exchanger tube 201, but not further upstream than the particle separator 140. What has been said about the term "upstream" applies.

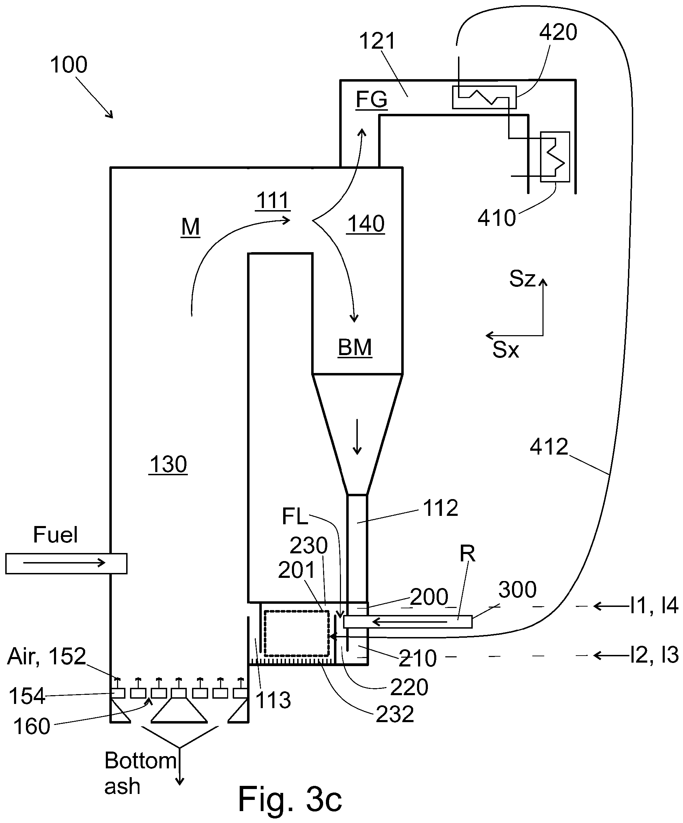

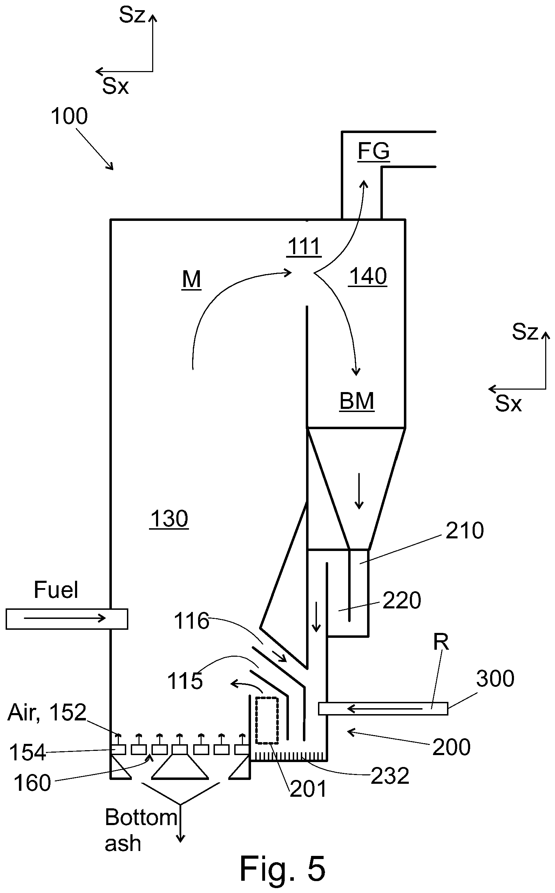

Referring to Fig. 1, in use, the bed material (or a part thereof) runs from the particle separator 140 through a primary second channel 112 to the heat exchanger tube 201, and through a primary third channel 113 at least a part thereof runs to the furnace 130. In the furnace 130 the mixture comprising the bed material forms and flow to and through a primary first channel 111 in this way ending up again to the particle separator 140. The primary first channel 111 may be an opening in a wall of the furnace 130 allowing for the mixture to travel to the particle separator 140 (see Fig. 5). The primary third channel 113 may be an opening in a wall of the furnace 130 allowing for the bed material fraction, optionally together with fluidizing gas fed to a heat exchanger 200, to travel from the heat exchanger 200 to the furnace 130 (see Fig. 3c).

According to the invention, a fluidized bed boiler 100 of the circulating type comprises a furnace 130, in which a fluidized bed comprising a mixture M of solid bed material and gas (air and/or flue gas) is configured to form.

The fluidized bed boiler 100 comprises a particle separator 140, which is configured to separate from the mixture M, (i) the solid bed material fraction BM and (ii) the flue gas fraction FG. The fluidized bed boiler 100 comprises the primary first channel 111 configured to convey the mixture M from the furnace 130 to the particle separator 140.

In order to recover heat from the bed material fraction BM or the part thereof, the fluidized bed boiler comprises the first heat exchanger 200 comprising the heat exchanger tube 201. What has been said about the location of the heat exchanger tube 201 in connection with the method, applies. Moreover, as detailed above, the heat exchanger tube 201 is configured to recover heat from the bed material fraction BM or the part thereof. Therefore, the fluidized bed boiler comprises a primary second channel 112 configured to convey at least a part of the bed material fraction BM from the particle separator 140 to the first heat exchanger 200.

Moreover, to return at least a part of the bed material to the furnace 130, the fluidized bed boiler comprises a primary third channel 113, which is configured to convey at least a part of the bed material fraction BM from the first heat exchanger 200 to the furnace 130. What has been said about conveying a part directly to a bottom ash cooler from the heat exchanger 200 in connection with the method applies.

In order to feed the sulphur-containing reagent R to such a location detailed above, the fluidized bed boiler 100 comprises means 300 for feeding a sulphur-containing reagent R to the bed material fraction BM upstream from the heat exchanger tube 201.

In an embodiment, the particle separator 140 comprises a cyclone. In an embodiment, the particle separator 140 is a cyclone. This has the benefit that the particle separator 140 can be continuously operated at a high temperature. Filters, such as perforated plates, e.g. perforated metal plates, could be used for the purpose of separating bed material and flue gas from their mixture in addition or as an alternative to the cyclone.

Even if the method is defined as being a method for operating a circulating fluidized bed boiler, the method is also a method for reducing corrosion of a fluidized bed heat exchanger of a circulating fluidized bed boiler, because the first heat exchanger 200 is a fluidized bed heat exchanger. As detailed below, a (bubbling) fluidized bed comprising the bed material fraction BM (or the part of the bed material fraction) may be arranged at a vicinity of the heat exchanger tube 201.

Concerning the sulphur-containing reagent R and, correspondingly, the means 300 for feeding the reagent, in an embodiment, the sulphur-containing reagent R comprises at least one of elementary sulphur (S) and a sulphate (i.e. a compound comprising the ion SO₄²⁻). Elementary sulphur may be used in solid form, e.g. in the form of granules or powder. As for the sulphates, they may be supplied in liquid form. However, it has been found that ferric sulphate (Fe₂(SO₄)₃) increases agglomeration of the particles of the bed material fraction BM. Therefore, if a sulphate is used as or in the reagent R, preferably, the sulphate is not ferric sulphate. As for the sulphates, diethyl sulphate ((C₂H₅)₂SO₄) and/or dimethyl sulphate ((CH₃)₂SO₄ are most preferable. However, in general, elementary sulphur is even more preferable, as it is cheaper to use. Therefore, in an embodiment, the sulphur-containing reagent R comprises at least one of elementary sulphur S and a sulphate that is not ferric sulphate, e.g. diethyl sulphate ((C₂H₅)₂SO₄) or dimethyl sulphate ((CH₃)₂SO₄). More preferably, the sulphur-containing reagent R comprises solid elementary sulphur (S). All these compounds produce sulphur oxide SOx (e.g. SO₂ and/or SO₃, see Eqns. 1 and 2) in the hot environment.

Solid elementary sulphur, e.g. in the form of granules and/or powder, may be fed to the fluidized bed boiler 100 through a pipeline. A carrier gas, such as air, may be used to facilitate feeding. For these reasons, in an embodiment, the means 300 for feeding the sulphur-containing reagent R is configured to feed the sulphur-containing reagent R in a form of solid granules and/or powder. In a preferable embodiment, the means 300 for feeding the sulphur-containing reagent R is configured to feed the sulphur-containing reagent R in a form of solid granules and/or powder by using a carrier gas, e.g. air, with which the solid granules and/or powder flow to a feeding location FL. In this embodiment, the means 300 comprises a pipeline configured to convey the granules and/or the powder. In addition or as an alternative to the carrier gas, transfer of the granules and/or powder within the means 300 may be facilitated by a conveyor, e.g. a conveyor screw. Thus, in an embodiment, the means 300 for feeding the sulphur-containing reagent R comprises a pipeline. In an embodiment, the means 300 for feeding the sulphur-containing reagent R comprises a conveyor, such as a screw conveyor.

Referring to Figs. 1 to 6 and 8b, the sulphur-containing reagent R is fed to a feeding location FL. Correspondingly, the means 300 for feeding the sulphur-containing reagent R is configured to feed the sulphur-containing reagent R to the feeding location FL.

Typically the particle separator 140, e.g. a cyclone, functions in such a way that the separated bed material fraction BM accumulates to and/or escapes from the particle separator 140 to/from a lower part of the particle separator 140. Correspondingly, the reagent R can be fed [i] downstream from the particle separator 140, but not further downstream than the heat exchanger tube 201 and/or [ii] to a lower part of the particle separator 140. Therefore, in an embodiment of the fluidized bed boiler 100, the feeding location FL is arranged in a lower part of the particle separator 140 or in a direction of a flow of the bed material fraction BM, downstream from the particle separator 140 and upstream from the heat exchanger tube 201. As detailed above, the heat exchanger tube 201 is arranged upstream from the furnace 130. More specifically, the feeding location FL is arranged as follows:
[A] in a lower part of the particle separator 140, or
[B,i] in a direction of a flow of the bed material fraction BM, downstream from the particle separator 140, but not further downstream from the particle separator 140 than the heat exchanger tube 201 and
[B,ii] in a direction of a flow of the bed material fraction BM, upstream from the heat exchanger tube 201, but not further upstream from the heat exchanger tube 201 than the lower part of the particle separator 140.

Naturally, a part of the reagent R may be supplied to the lower part of the particle separator 140 (see option [A] above) and another part or other parts may be supplied between the particle separator 140 and the heat exchanger tube 201 (see option [B] above).

In terms of distances along the flow path of the bed material, the feeding location FL is arranged [A] in a lower part of the particle separator 140 or [B] such that in the direction of flow of the bed material fraction in the bed material circulation between the particle separator 140 and the furnace 130 a distance between feeding location FL and the particle separator 140 is less than a distance between the heat exchanger tube 201 and the particle separator 140, wherein the distances are measured along a path that starts from the particle separator 140, runs from the particle separator 140 along the path the bed material flows, and ends to the particle separator 140 after one full round.

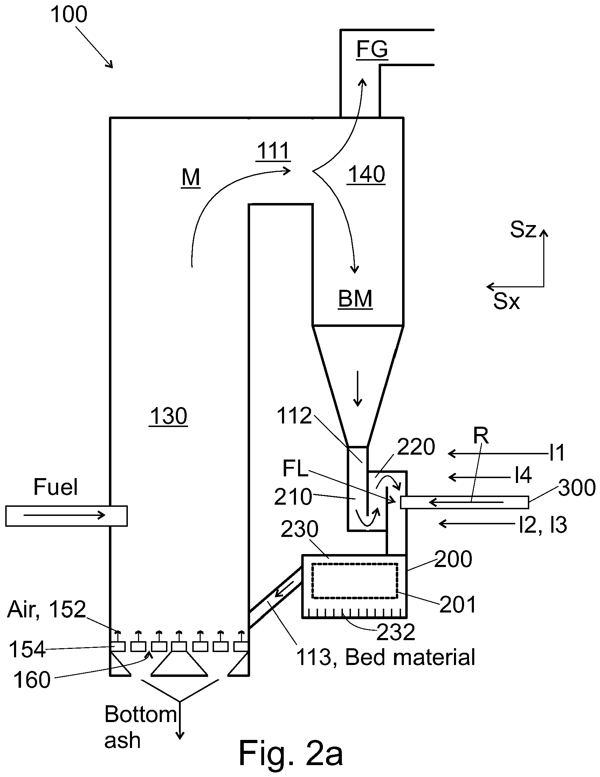

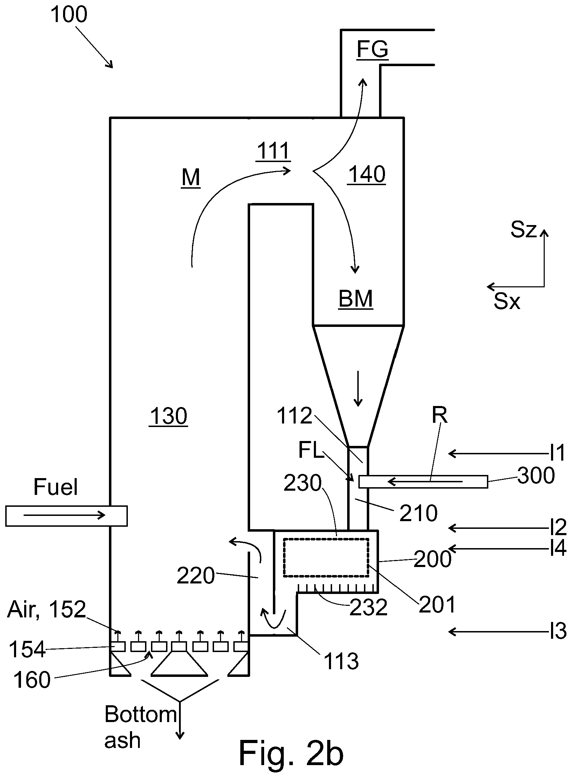

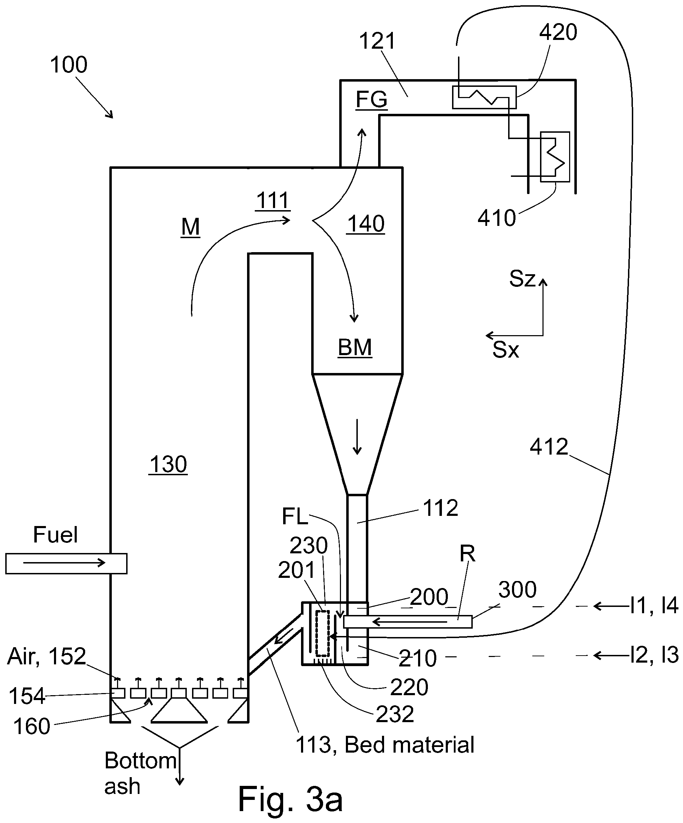

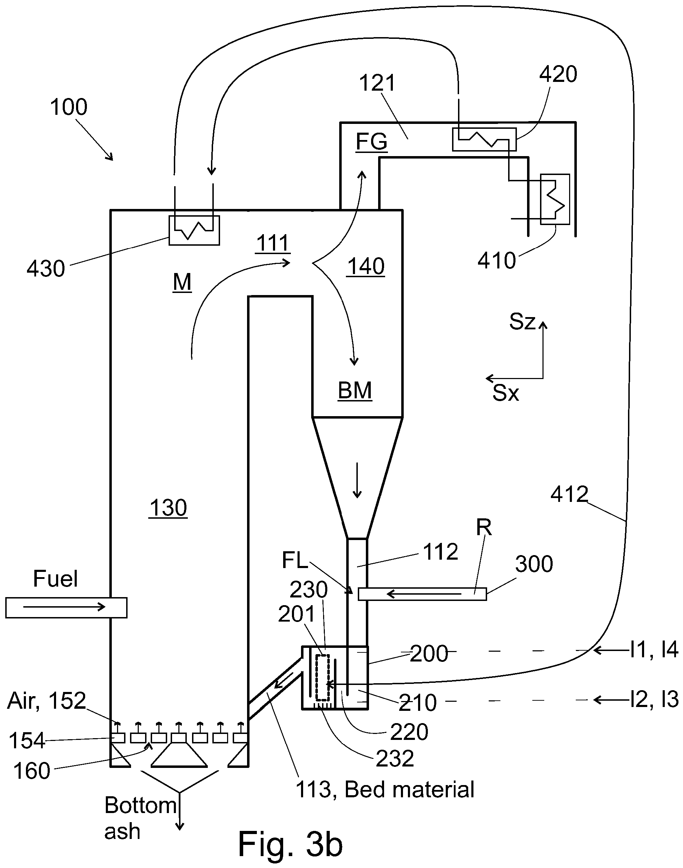

As detailed above, the consumption of the sulphur-containing reagent R is diminished because the reagent R is fed only to the separated bed material fraction BM, which comprises only a little flue gas, and thereby only a little alkali chlorides. Referring specifically to Figs. 2a and 2b, the separation of bed material fraction BM and flue gas fraction FG can be enhanced by providing the circulating fluidized bed boiler 100 with a loopseal. In general, a loopseal is used in circulating fluidized bed systems to convey particles from a low pressure region to a high pressure region. One of the principal functions of a loopseal is to avoid the undesirable inverse gas/particle flow and to provide gas tightness. Typically, a loopseal comprises at least two chambers, i.e. a first chamber 210 and a second chamber 220 (see Figs. 2a, 2b, 3a, and 3b). To ensure proper circulation of bed material fraction, the loopseal, if arranged, is arranged downstream from the particle separator 140, but not further downstream than the furnace 130.

The loopseal forms a part of the circulating fluidized bed boiler 100. Thus in an embodiment, the circulating fluidized bed boiler 100 comprises the first chamber 210 and the second chamber 220. Moreover, the loopseal is used to prevent the inverse circulation of the bed material fraction, whereby the loopseal is provided in between the particle separator 140 and the furnace 130 such that in use, the bed material fraction flows from the particle separator 140 to the loopseal and from the loopseal to the furnace (not vice versa). Therefore, the first chamber 210 is arranged downstream from the particle separator 140 (but not further downstream than the second chamber 220) in a direction of a flow of the bed material fraction BM, and the second chamber 220 is arranged downstream from the first chamber 210 but not further downstream than the furnace 130 in a direction of a flow of the bed material fraction BM.

Concerning an embodiment of the method, i.e. in a use of the circulating fluidized bed boiler 100, the bed material fraction BM enters the first chamber 210 of the circulating fluidized bed boiler 100 at a first level I1 and exits the first chamber 210 at a second level I2. The term "level" refers to distance from ground level, thereby determining a height at which the bed material enters/exits the chamber 210, 220. The second level I2 is arranged lower than the first level I1. The levels I1 and I2 are shown in Figs. 2a to 3b. It is noted that the direction arrow Sz in these figures points upwards, i.e. reverse to gravity. Furthermore, in use, the bed material fraction BM enters a second chamber 220 of the circulating fluidized bed boiler 100 at a third level I3 and exits the second chamber 220 at a fourth level I4. The fourth level I4 is arranged higher than the third level I3. The levels I3 and I4 are shown in Figs. 2a to 3b.

Concerning an embodiment of the circulating fluidized bed boiler, the bed material fraction is configured to enter and exit the chamber 210, 220 as discussed above.

In a preferable embodiment, as shown in Figs. 2a, 3a, and 3b, the second chamber 220 is arranged upstream from the heat exchanger tube 201 in the direction of a flow of the bed material fraction BM. More specifically, the second chamber 220 is arranged upstream from the heat exchanger tube 201 in the direction of a flow of the bed material fraction BM, but not further upstream than the first chamber 210. To some extent this improves the separation of the bed material fraction already upstream from the heat exchanger tube 201.

Preferably, in such an embodiment, the feeding location FL is arranged in the second chamber 220 (as shown in Fig. 3a) or in a direction of a flow of the bed material fraction BM, downstream from the second chamber 220 (as shown in Fig. 2a), but not further downstream than the heat exchanger tube 201. The direction "downstream" refers to the direction of flow of the bed material fraction BM.

Concerning the position of the chambers 210, 220, in an embodiment, the bed material fraction BM is configured to flow substantially downwards in the first chamber 210 and substantially upwards in the second chamber 220. Reference is made to Figs. 2a to 3b.

As detailed above, the corrosive effect of the alkali chlorides is most prominent at a certain temperature window, which most often would occurs only in a last heat exchanger configured to heat the heat transfer medium. Herein the term "last" refers to the direction of flow of heat transfer medium within a circulation of the heat transfer medium. Such circulation is shown e.g. in Fig. 3b, the heat transfer medium therein flowing from the heat exchanger 410 to the heat exchanger 420, therefrom to the heat exchanger 430, and therefrom to the first heat exchanger 200, which is also the last heat exchangers in this circulation. After the last heat exchanger, the heat transfer medium is conveyed for use; most typically at this stage, the heat transfer medium is superheated steam, which is conveyed to a steam turbine combined with a generator for the production of electricity.

Thus, in an embodiment, the first heat exchanger 200 comprising the heat exchanger tube 201 is such a last heat exchanger that no heat exchanger that is arranged to be in contact with flue gas is arranged to a location that is downstream from the first heat exchanger 200 (but not further downstream than a steam turbine, if a steam turbine is used), the term "downstream" here referring to the direction of flow of the heat transfer medium flowing within the circulation of the heat transfer medium. Thus, in such a case, the first heat exchanger 200 is also such a last heat exchanger that no other heat exchanger in which in use the steam is at least as hot as in the first heat exchanger 200 is arranged to be in contact with flue gas. Naturally, when the system comprises a steam turbine, downstream from the steam turbine the steam may condense and be recirculated back to an economizer, e.g. the heat exchanger 410.

In other words, in such heat exchangers that are arranged upstream from the last heat exchanger (in the direction of flow of the heat transfer medium), the heat transfer medium may be cooler, whereby also a temperature of an outer surface of a tube of that heat exchanger may be, in use, cooler than the lower critical temperature, above which the corrosion is most prominent. Reference is made to the section "Background". Notable, reducing corrosion e.g. by feeding sulphur onto heat exchanger tubes of such other heat exchangers is not needed. Correspondingly feeding the sulphur-containing reagent R only to one or more locations as discussed above reduces the consumption of the reagent R. Thus, an embodiment of the method comprises feeding the sulphur-containing reagent R only to the bed material fraction BM (or only to a part of the bed material fraction BM) and only to one or more location(s) that is/are upstream from the heat exchanger tube 201. The proper location has been discussed in more specific terms above. In case the reagent R is fed to multiple locations, what has been said above for the feeding location FL applies to each of the multiple locations.

Naturally, a minor amount of the reagent R (or other sulphur-containing reagent) can be fed also elsewhere, but that seems not to have a technical effect on corrosion, at least provided that the temperature window of the other heat transfer surfaces remain outside the temperature window, in particular lower than the lower critical temperature. Furthermore, typically a fluidized bed boiler is equipped with multiple heat exchanger to effectively recover heat from the flue gases and/or from the bed material and/or received by radiation at the other heat exchanger.

Thus, an embodiment of the method comprises feeding a first amount M1 of the sulphur-containing reagent R to the bed material fraction BM (i.e. the separated bed material), to one or more location(s) that is/are upstream from the heat exchanger tube 201. In case the reagent R is fed to multiple locations, what has been said above for the feeding location FL applies to each of the multiple locations. Moreover, the amount M1 in such a case refers to the total amount of the sulphur-containing reagent R fed to the multiple locations. The first amount M1 refers to a rate (e.g. kg/h). The first amount M1 may be an average value taken e.g. over an hour of operation.

Moreover, as detailed above, an embodiment comprises not feeding the sulphur-containing reagent R to any one of: the flue gas fraction FG, the primary first channel 111, or the furnace 130.

However, if, for some reason, some sulphur-containing reagent (same reagent R or other reagent) was fed elsewhere, preferably that amount would not be significant compared to the first amount M1. More specifically, such an embodiment comprises feeding a second amount M2 of the sulphur-containing reagent R and/or other sulphur-containing reagent to the flue gas fraction FG, the primary first channel 111 and/or the furnace 130, wherein a ratio (M1/M2) of the first amount M1 to the second amount M2 is at least one third 1/3. Preferably the ratio M1/M2 is at least one, more preferably at least 3. As detailed above, a non-zero second amount M2 seems not to have any beneficial technical effect when the operating temperatures are proper. If the sulphur-containing reagent R and/or other sulphur-containing reagent is fed to more than one of the flue gas fraction FG, the primary first channel 111 and/or the furnace 130, the second amount refers to the total amount of the reagent fed to these places. The second amount M2 refers to a rate (e.g. kg/h). The second amount M2 may be an average value taken e.g. over an hour of operation.

However, feeding a lot of sulphur to the fluidized bed boiler has the disadvantage of increasing the need for removing sulphur from the flue gas fraction FG. Therefore, preferable the second amount M2 is zero (i.e. the sulphur-containing reagent R is not fed to any one of: the flue gas fraction FG, the primary first channel 111, or the furnace 130).

To have a suitably low temperature at a surface of the second heat exchanger (410, 420, 430) the circulating fluidized bed boiler 100 according to the invention comprises a pipeline 412 for conveying heat transfer medium from the second heat exchanger (410, 420, 430) to the first heat exchanger 200, optionally via another heat exchanger. For example, in Fig. 3b, the pipeline 412 conveys water/steam also from the heat exchanger 420 to the first heat exchanger 200, via the heat exchanger 430. In contrast, in in Fig. 3a, the pipeline 412 conveys water/steam from the heat exchanger 420 to the first heat exchanger 200 directly. In use, i.e. in an embodiment according to the invention of the method, the pipeline 412 conveys heat transfer medium from the second heat exchanger (410, 420, 430) to the first heat exchanger 200. Because of the pipeline, the second heat exchanger (410, 420, 430) is arranged upstream (in the direction of heat transfer medium circulation) from the first heat exchanger, whereby a temperature of an outer surface of a tube of the second heat exchanger (410, 420, 430) remains sufficiently low.

As for the proper temperature, in an embodiment, a temperature of an outer surface of a second heat exchanger tube of the second heat exchanger (410, 420, 430) of is less than 450 °C. In such a case, the temperature is sufficiently low for not having significant corrosion problems on the an outer surface of a second heat exchanger tube of the second heat exchanger (410, 420, 430).

However, the feeding of the sulphur-containing reagent R is particularly beneficial, when a temperature of an outer surface of the heat exchanger tube 201 is within a critical temperature window, as detailed above. Therefore, in an embodiment, a temperature of an outer surface of the heat exchanger tube 201 is more than 450 °C, such as from 450 °C to 750 °C. It is possible to also increase a surface temperature of the heat exchanger tube 201 by applying an insulator 201c, as detailed below.

To efficiently recover heat, according to the invention, the circulating fluidized bed boiler 100 comprises the second heat exchanger (410, 420, 430) to recover heat from the flue gas fraction FG, as shown in Fig. 3a. In an embodiment, the second heat exchanger 430 is configured to recover heat from the mixture M as shown in Fig. 3b. The fluidized bed boiler 100 may comprise multiple second heat exchangers (410, 420, 430) configured to recover heat from the flue gas fraction FG or from the mixture M, as shown in Fig. 3b.

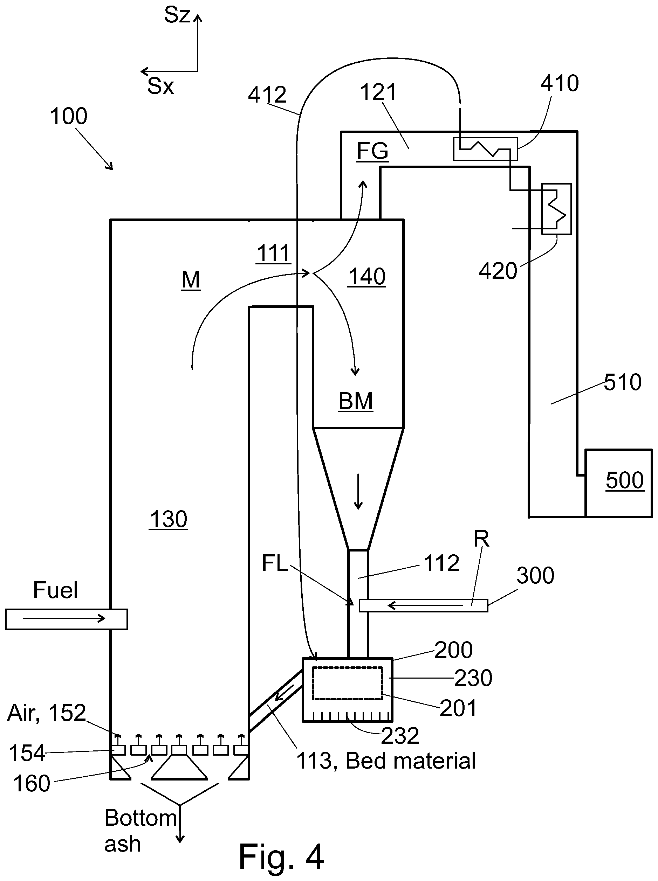

Using the fluidized bed boiler 100 should only have as minor environmental effects as possible. This applies at least to emissions of sulphur oxides SOx. In order to reduce sulphur oxide emissions, according to the invention, the circulating fluidized bed boiler 100 comprises a sulphur removal unit 500 and a channel 510 configured to convey the flue gas fraction FG to the sulphur removal unit 500 (see Fig. 4) for removing sulphur from the flue gas fraction FG. Sulphur can be removed by from the flue gas fraction means known as such. For example, an embodiment comprises removing sulphur oxide (SOx) from the flue gas fraction FG in a wet scrubber. The wet scrubber may be comprised by the sulphur removal unit 500. The sulphur removal unit 500 may be a wet scrubber. An aqueous and alkaline scrubbing solution may be used in the wet scrubber for removing the sulphur oxides.

The effect of not feeding sulphur e.g. to flue gas (i.e. the second amount M2 being zero), or feeding only a minor amount of sulphur e.g. to flue gas (i.e. the ratio M1/M2 being as discussed above) has the further effect that a smaller sulphur removal unit 500 suffices, compared to the case where relatively large amounts of sulphur was fed also to other locations that those discussed above. Thus, feeding the reagent R as discussed above diminishes the investment and operating costs related to the sulphur removal unit 500.

According to the invention, the circulating fluidized bed boiler 100 comprises a second heat exchanger (410, 420) configured to recover heat from the flue gas fraction FG to the heat transfer medium; and the second heat exchanger (410, 420) is arranged downstream from the particle separator 140 in the direction of flow of the flue gas fraction FG, but not further downstream than the sulphur removal unit 500.

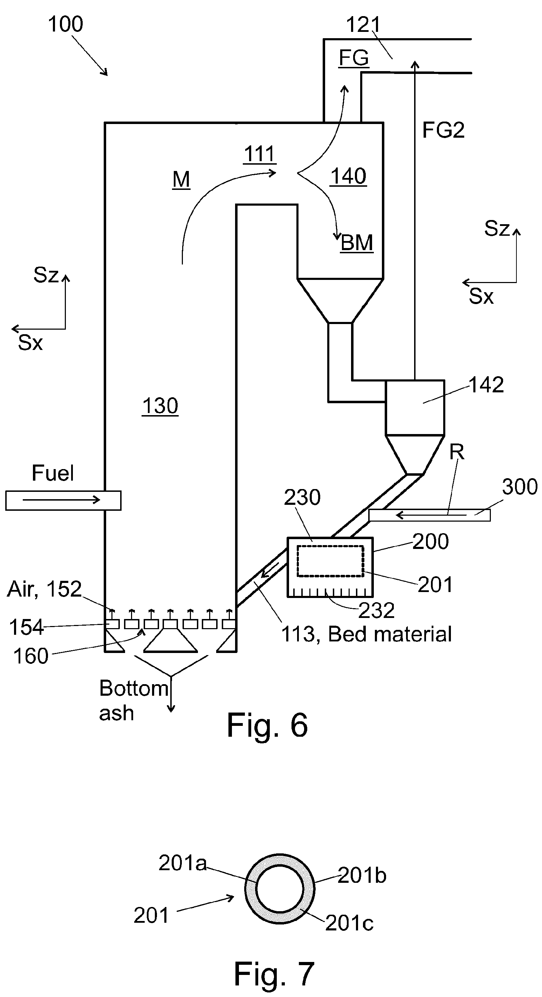

As detailed above, the corrosion problem of the heat exchanger tube 201 can be further reduced by increasing a temperature of an outer surface of the heat exchanger tube 201. It has been found that the temperature of an outer surface of the heat exchanger tube 201 can be increased by reducing thermal conductivity of the heat exchanger tube 201. This can be done by providing thermal insulation in between the inner and outer surfaces of the heat exchanger tube 201. Therefore, and with reference to Fig. 7, in an embodiment, the heat exchanger tube 201 comprises an inner tube 201a, an outer tube 201b radially surrounding the inner tube 201a, and thermally insulating material 201c arranged in between the inner tube 201a and the outer tube 201b. Preferably, the thermal conductivity of the thermally insulating material 201c is from 1 W/mK (Watt per metre Kelvin) to 10 W/mK at 20 °C.

To promote the bed material circulation particularly near the heat exchanger tube 201, the bed material fraction BM in a vicinity of the heat exchanger tube 201 is fluidized. Referring to Figs. 1 to 6 and 8a, an embodiment of the circulating fluidized bed boiler 100 comprises nozzles 232 configured to fluidize the bed material fraction BM in the vicinity of the heat exchanger tube 201. On one hand the fluidizing of the bed material fraction BM facilitates the flow of the bed material fraction BM. On the other hand, when the fluidizing gas comprises oxygen O₂, the fluidizing gas enhances the reactions of the Equations (1) and (2) and in this way helps to reduce the corrosion problems. Thus, an embodiment comprises fluidizing at least a part of the bed material fraction BM in a vicinity of the heat exchanger tube 201 by feeding fluidizing gas, wherein the fluidizing gas comprises oxygen O₂. Preferably the fluidizing gas further comprises humidity H₂O. Air may be used as the fluidizing gas. When the system comprises a bypass 206, not all the bed material needs to be fluidized in the vicinity of the heat exchanger tube 201. As an alternative to fluidizing gas, oxygen-containing gas may be fed to a location that is arranged downstream from the particle separator 140 but not further downstream than the heat exchanger tube 201. As detailed above, the oxygen-containing gas may further be used for fluidizing the bed material fraction BM. The oxygen-containing gas may comprise humidity (H₂O). Preferably, the oxygen-containing gas does not comprise a lot of corrosive compounds of the flue gas, because this would increase the consumption of the sulphur-containing reagent R.

More specifically, an embodiment of the circulating fluidized bed boiler 100 comprises a first compartment 230, in which the heat exchanger tube 201 is arranged. The term "compartment" refers to a space surrounded by walls. Moreover, the nozzles 232 are configured to fluidize the bed material fraction BM in the first compartment 230. Preferably, the nozzles 232 are arranged at a bottom of the first compartment 230. Thus, by feeding fluidizing gas, e.g. air, through the nozzles 232 the circulation of bed material fraction BM can be enhanced. Naturally, corrosive compounds, e.g. alkali chlorides, should not be fed with the fluidizing gas to the first compartment 230. In such an arrangement, the means 300 for feeding the sulphur-containing reagent R to the bed material fraction BM may be configured to
- feed the sulphur-containing reagent R to a feeding location FL that is upstream from the first compartment 230 in the direction of flow of the bed material fraction, but not further upstream than the particle separator 140, or
- into the first compartment 230, but upstream from the heat exchanger tube 201.

What has been said above about the content of fluidizing gas, applies.

Referring to Fig. 3a, a preferable embodiment comprises:
- the first compartment 230 into which the heat exchanger tube 201 is arranged,
- the second chamber 220 as discussed above and arranged upstream from the first compartment 230,
- the first chamber 210 as discussed above and arranged upstream from the second chamber, and
- the means 300 is configured to food the reagent R into the second chamber 220 (whereby the method comprises feeding the reagent R into the second chamber 220).

Even if not shown in the figures, nozzles for feeding fluidizing air for improving the bed material circulation may be provided also to other compartments or chambers 210, 220, if considered feasible. In particular, in the embodiments of Figs. 3a to 3c and 5, both the chambers 210, 220 may be provided with such nozzles. In the embodiment of Fig. 2b, a bottom of the channel 113 may be provided with such nozzles.

In the embodiments of Figs. 1 to 4, 6, and 8a the fluidizing gas fed through the nozzles 232 may be conveyed with the bed material fraction BM to the furnace through the primary third channel 113 (which may be called a return channel).

In the embodiment of Fig. 5, the circulating fluidized bed boiler 100 is provided with an auxiliary channel 115 and an opening 116. Nozzles for feeding fluidizing air may be provided at a bottom of the auxiliary channel 115. The auxiliary channel 115 may be used to guide some of the bed material to the first heat exchanger 200 from the furnace 130 directly. It may be possible that a content of corrosive compounds at a bottom of the furnace 130 is so low that only a little alkali chlorides of the flue gases pass from the furnace 130 to the heat exchanger 200 through the auxiliary channel 115. The opening 116 can be used is some operating conditions for guiding bed material directly from the furnace 130 to the first heat exchanger. Thus, a part of the bed material in the furnace will not propagate to the particle separator 140, but can be circulated to the first heat exchanger 200 via the opening 116, which may serve the purpose of a particle separator. Typically also the opening 116 decreases an amount of flue gases near the heat exchanger tube 201 compared to the furnace. Moreover, in regular use of the circulating fluidized bed boiler, the bed material circulates at least from the furnace 130 to the particle separator 140, therefrom to the first heat exchanger 200, and therefrom back to the furnace 130. Because the sole purpose of the first heat exchanger 200 is to recover heat, the bed material is not conveyed to the furnace only through the bypass opening 115.

In the embodiments of Figs. 1 to 4, 6, and 8a, the first heat exchanger 200 only receives bed material through the particle separator 140. Thus, in an embodiment, no other bed material than the bed material fraction BM that has been separated in the particle separator 140 is conveyed to the first heat exchanger 200. As detailed below, not all the separated bed material needs to be conveyed to the heat exchanger tube 201. Fluidizing gas fed through the nozzles 232 may be conveyed with the bed material fraction BM to the furnace 130 through the primary third channel 113 (which may be called a return channel).

It is noted that in the embodiment of Fig. 5, the auxiliary channel 115 could be used, in the alternative, to expel bed material fraction BM from the heat exchanger 200 so that the bed material fraction BM or a part of the bed material fraction BM bypasses the heat exchanger tube 201. It may be beneficial to be able to let a part of the bed material fraction BM bypass the heat exchanger tube 201, because the temperature of the heat transfer medium downstream from the first heat exchanger 200 (in the direction of the flow of the heat transfer medium) needs often be carefully controlled.

For a detailed structure of a suitable heat exchanger having a bypass reference is made to the publications WO 2018/083367, WO 2019/122509, and US5184671.

The loopseal heat exchangers presented therein can be used as the first heat exchanger 200 of the present invention. If a heat exchanger of the publication WO 2018/083367 is used, preferably the sulphur-containing reagent R is fed to the feeding chamber 150 of the heat exchanger of Fig. 2a of the publication WO 2018/083367. However, the sulphur-containing reagent R may be fed e.g. to the inlet chamber 100 of the heat exchanger of any one of Figs. 2a, 6, or 7 of the publication WO 2018/083367 and/or to the channel 60 of Fig. 1 of the publication WO 2018/083367. If a heat exchanger of the publication WO 2019/122509 is used, preferably the sulphur-containing reagent R is fed to the feeding chamber 100 of Fig. 2 of the publication WO 2019/122509 or to the channel 60 of Fig. 1 of the publication WO 2019/122509. If a heat exchanger of the publication US5184671 is used, preferably the reagent R is fed to the feeding chamber A of the heat exchanger of the Figs. 1 to 3 of the publication US5184671. In addition or alternatively, the reagent R may be fed e.g. to the inlet pipe 40 of the Figs. 1 to 3 of the publication US5184671. For another detailed structure of a suitable heat exchanger reference is made to the publication WO2019/086752.

If a heat exchanger of the publication WO2019/086752 is used, preferably the reagent R is fed to the feeding upleg 102 of the heat exchanger of the Figs. 4a to 5b the publication WO2019/086752. In addition or alternatively, the reagent R may be fed e.g. to the dip leg 100 of the publication WO2019/086752.

In an embodiment, the circulating fluidized bed boiler 100 comprises a bypass 206 (see Figs. 8a and 8b) that is configured to guide a part of the bed material fraction BM from the particle separator 140 to the furnace 130 (e.g. via the primary third channel 113 of Figs. 8a and 8b) such that the part of the bed material fraction BM that travels through the bypass 206 does not come into contact with the heat exchanger tube 201.

When the circulating fluidized bed boiler 100 comprises the bypass 206, the circulating fluidized bed boiler 100 comprises a splitting chamber 205 configured to guide a first part of the bed material fraction BM to the heat exchanger tube 201 and a second part to the bypass 206. Structures of bypasses are disclosed in the publications cited above, and the operating principle is also illustrated in Figs. 8a and 8b. However, for clarity, a splitting chamber 205 is shown also in Fig. 8b. In Fig. 8b, the primary second channel 112 extends downwards (in the negative Sz direction) to the splitting chamber 205, which splits the bed material fraction to two parts. The splitting chamber 205 divides the bed material fraction to the first part, which is conveyed to the heat exchanger tube 201 (i.e. onto the heat exchanger tube 201, as the water/steam propagates in the tube). The second part flows through the bypass 206. The division of the bed material to the first and second parts can be controlled by fluidizing gas feed as detailed e.g. in the cited publications. Preferably, in such an embodiment, the sulphur-containing reagent R is fed to the first part of the bed material fraction BM and downstream from the splitting chamber 205 (or into the splitting chamber 205), but not further downstream than the heat exchanger tube 201. This further reduces the consumption of the sulphur-containing reagent R, because the bypass 206 is (or at least may be) free from heat transfer surfaces, whereby the reagent R is not needed in the bypass 206. Thus, the feeding location FL is, in an embodiment, arranged in the splitting chamber 205 or downstream from the splitting chamber 205, but not further downstream than the heat exchanger tube 201. Thus, the feeding location FL is, in an embodiment, arranged such that the sulphur-containing reagent R is fed to the first part of the bed material fraction (i.e. not conveyed to the bypass 206).

Therefore, an embodiment comprises dividing the bed material fraction BM to a first part and a second part using a splitting chamber, guiding the first part of the bed material fraction to the to the heat exchanger tube 201, guiding the second part of the bed material fraction through a bypass 206 so that the second part of bed material fraction BM does not come into contact with the heat exchanger tube 201, and feeding the sulphur-containing reagent R to the splitting chamber 205 or downstream from the splitting chamber 205, but not further downstream than the heat exchanger tube 201. The bypass 206 may be arranged as a part of the heat exchanger 200 is detailed in the publications listed above and in Fig. 8b. In the alternative, a bypass may be arranged in parallel with the heat exchanger 200.

Referring to Fig. 6, the fluidized bed boiler may comprise a first particle separator 140 and a second particle separator 142 in cascade. This has the effect that each particle separator removes some flue gas from the bed material. The first particle separator 140 separates a first flue gas fraction FG and the bed material fraction. The second particle separator 142 separates a second flue gas fraction FG2 and a bed material fraction. The flue gas fractions FG, FG2 from each separator 140, 142 may be conveyed to a secondary first channel 121, which conveys the flue gas fractions away from the furnace 130. the flue gas fractions FG, FG2 may be conveyed e.g. to a second heat exchanger 410, 420 as detailed in Figs. 3a to 3c. When more than one particle separators are used, the sulphur-containing reagent R is preferably fed to a location that is arranged at a lower part of a last particle separator or downstream from the last particle separator. Herein the term "last particle separator" refers to such a particle separator that is most downstream in the direction of flow of the bed material. Such a last particle separator is shown by the reference 142 in Fig. 6. However, it may happen that some other particle separator, e.g. the particle separator 140 of Fig. 6, functions already sufficiently effectively, whereby also in case there are at least two particle separators 140, 142, the sulphur-containing reagent R may be fed to a location that is arranged at a lower part of one of the particle separators (e.g. 140, even if 142 is present) or downstream from one of the particle separators (e.g. 140, even if 142 is present).

## Claims

1. A fluidized bed boiler (100) of the circulating type, comprising
- a furnace (130), in which a fluidized bed comprising a mixture (M) of solid bed material and gas is configured to form,
- a particle separator (140) configured to separate from the mixture (M) a solid bed material fraction (BM) and a flue gas fraction (FG),
- a primary first channel (111) configured to convey the mixture (M) from the furnace (130) to the particle separator (140),
- a first heat exchanger (200) comprising a heat exchanger tube (201) configured to recover heat from at least a part of the bed material fraction (BM) and arranged upstream from the furnace (130),
- a primary second channel (112) configured to convey at least the part of the bed material fraction (BM) from the particle separator (140) to the first heat exchanger (200), and
- a primary third channel (113) configured to convey at least a part of the bed material fraction (BM) from the first heat exchanger (200) to the furnace (130),
- means (300) for feeding a sulphur-containing reagent (R) to the bed material fraction (BM) upstream from the heat exchanger tube (201),
**characterized by**
- a sulphur removal unit (500),
- a channel (510) configured to convey the flue gas fraction (FG) to the sulphur removal unit (500),
- a second heat exchanger (410, 420) configured to recover heat from the flue gas fraction (FG), the second heat exchanger (410, 420) being arranged downstream from the particle separator (140) and upstream from the sulphur removal unit (500) in the direction of flow of the flue gas fraction (FG), and
- a pipeline (412) configured to convey heat exchange medium from the second heat exchanger (410, 420) to the first heat exchanger (200).

2. The fluidized bed boiler (100) of claim 1, wherein
- the means (300) for feeding a sulphur-containing reagent (R) is configured to feed the sulphur-containing reagent (R) to a feeding location (FL), wherein
- the feeding location (FL) is arranged
• in a lower part of the particle separator (140) or
• in a direction of a flow of the bed material fraction (BM), downstream from the particle separator (140) and upstream from the heat exchanger tube (201);
preferably,
- the fluidized bed boiler (100) comprises a splitting chamber (205) configured to divide the bed material fraction to a first part and a second part,
- the heat exchanger tube (201) is configured to recover heat from the first part of the bed material fraction, and
- the means (300) for feeding a sulphur-containing reagent (R) is configured to feed the sulphur-containing reagent (R) to the first part of the bed material fraction.

3. The fluidized bed boiler (100) of the claim 1 or 2, comprising
- a first chamber (210) and a second chamber (220), wherein
- the first chamber (210) is arranged downstream from the particle separator (140) in a direction of a flow of the bed material fraction (BM),
- the second chamber (220) is arranged downstream from the first chamber (210) and upstream from the furnace (130) in a direction of a flow of the bed material fraction (BM),
- the bed material fraction (BM) is configured to enter the first chamber (210) at a first level and exit the first chamber (210) at a second level,
- the second level is arranged lower than the first level,
- the bed material fraction (BM) is configured to enter the second chamber (220) at a third level and exit the second chamber (220) at a fourth level, and
- the fourth level is arranged higher than the third level;
preferably,
- the second chamber (220) is arranged upstream from the heat exchanger tube (201) in the direction of a flow of the bed material fraction (BM);
more preferably
- a/the feeding location (FL) is arranged
• in the second chamber (220) or
• in a direction of a flow of the bed material fraction (BM), downstream from the second chamber (220).

4. The fluidized bed boiler (100) of any of the claims 1 to 3, wherein
- the means (300) for feeding the sulphur-containing reagent (R) is configured to feed the sulphur-containing reagent (R) in a form of solid granules and/or powder;
preferably,
- the means (300) for feeding the sulphur-containing reagent (R) is configured to feed the sulphur-containing reagent (R) in a form of solid granules and/or powder by using a carrier gas, e.g. air, with which the solid granules and/or powder flow to a/the feeding location (FL).

5. The fluidized bed boiler (100) of any of the claims 1 to 4, comprising
- another heat exchanger (430) configured to recover heat from the mixture (M), wherein
- the pipeline (412) is configured to convey heat exchange medium, such as steam, from the other heat exchanger (430) to the first heat exchanger (200); preferably,
- the fluidized bed boiler (100) does not comprise means for feeding the sulphur-containing reagent (R) or another sulphur-containing reagent to any one of the flue gas fraction (FG), the primary first channel (111), or the furnace (130).

6. The fluidized bed boiler (100) of claim 5, wherein
- the pipeline (412) is configured to convey heat transfer medium from the second heat exchanger (410, 420) to the first heat exchanger (200) via the other heat exchanger (430).

7. The fluidized bed boiler (100) of any of the claims 1 to 6, wherein
- the heat exchanger tube (201) comprises
• an inner tube (201a),
• an outer tube (201b) radially surrounding the inner tube (201a) and
• thermally insulating material (201c) arranged in between the inner tube (201a) and the outer tube (201b);
preferably,
- a thermal conductivity of the thermally insulating material (201c) is from 1 W/mK to 10 W/mK at 20 °C.

8. The fluidized bed boiler (100) of any of the claims 1 to 7, comprising
- a first compartment (230), the heat exchanger tube (201) being arranged in the first compartment (230) and
- nozzles (232) for fluidizing the bed material fraction (BM) in the first compartment (230), wherein
- the means (300) for feeding the sulphur-containing reagent (R) to the bed material fraction (BM) is configured to feed the sulphur-containing reagent (R) upstream from the first compartment (230) or into the first compartment (230).

9. A method for operating a circulating fluidized bed boiler (100), the method comprising
- feeding air, fuel, and bed material to a furnace (130) of the circulating fluidized bed boiler (100),
- combusting the fuel in the furnace (130) thereby producing flue gas,
- conveying a mixture (M) comprising the flue gas and the bed material from the furnace (130) to a particle separator (140),
- separating from the mixture (M) a bed material fraction (BM) and a flue gas fraction (FG) with the particle separator (140),
- conveying at least a part of the bed material fraction (BM) from the particle separator to a first heat exchanger (200) comprising a heat exchanger tube (201) arranged upstream from the furnace (130),
- recovering heat from the at least a part of the bed material fraction (BM) with the heat exchanger tube (201), and
- conveying a part of the bed material fraction (BM) or the whole bed material fraction (BM) from the heat exchanger tube (201) to the furnace (130), and
- feeding a sulphur-containing reagent (R) to the bed material fraction (BM) upstream from the heat exchanger tube (201),
**characterized in that** the circulating fluidized bed boiler (100) comprises
- a sulphur removal unit (500),
- a channel (510) configured to convey the flue gas fraction (FG) to the sulphur removal unit (500),
- a second heat exchanger (410, 420) configured to recover heat from the flue gas fraction (FG), the second heat exchanger (410, 420) being arranged downstream from the particle separator (140) and upstream from the sulphur removal unit (500) in the direction of flow of the flue gas fraction (FG), and
- a pipeline (412) configured to convey heat exchange medium from the second heat exchanger (410, 420) to the first heat exchanger (200).

10. The method of claim 9, comprising
- feeding the sulphur-containing reagent (R) to a feeding location (FL) that is arranged
• in a lower part of the particle separator (140) or
• in a direction of a flow of the bed material fraction (BM), downstream from the particle separator (140) and upstream from the heat exchanger tube (201).

11. The method of claim 9 or 10, wherein
- the bed material fraction (BM) enters a first chamber (210) of the circulating fluidized bed boiler (100) at a first level and exits the first chamber (210) at a second level,
- the second level is arranged lower than the first level,
- the bed material fraction (BM) enters a second chamber (220) of the circulating fluidized bed boiler (100) at a third level and exits the second chamber (220) at a fourth level,
- the fourth level is arranged higher than the third level,
- the first chamber (210) is arranged downstream from the particle separator (140) in a direction of a flow of the bed material fraction (BM), and
- the second chamber (220) is arranged downstream from the first chamber (210) and upstream from the furnace (130) in a direction of a flow of the bed material fraction (BM);
preferably,
- the second chamber (220) of the fluidized bed boiler is arranged upstream from the heat exchanger tube (201);
more preferably the method comprises
- feeding the sulphur-containing reagent (R) to a/the feeding location (FL) that is arranged
• in the second chamber (220) or
• in a direction of a flow of the bed material fraction (BM), downstream from the second chamber (220).

12. The method of any of the claims 9 to 11, wherein
- the sulphur-containing reagent (R) comprises at least one of
• elementary sulphur (S) and
• a sulphate that is not ferric sulphate, e.g. diethyl sulphate ((C₂H₅)₂SO₄) or dimethyl sulphate ((CH₃)₂SO₄),
preferably,
- the sulphur-containing reagent (R) comprises solid elementary sulphur (S) e.g. in a form of granules and/or powder.

13. The method of any of the claims 9 to 12, comprising [A]
- dividing the bed material fraction (BM) to a first part and a second part,
- guiding the first part of the bed material fraction to the to the heat exchanger tube (201),
- guiding the second part of the bed material fraction (BM) through a bypass (206) so that the second part of bed material fraction (BM) does not come into contact with the heat exchanger tube (201),
- feeding the sulphur-containing reagent (R) to the first part of the bed material fraction AND/OR [B]
- feeding the sulphur-containing reagent (R) only to the bed material fraction (BM) and only to one or more location(s) that is/are upstream from the heat exchanger tube (201).

14. The method of any of the claims 9 to 13, comprising
- feeding a first amount (M1) of the sulphur-containing reagent (R) to the bed material fraction (BM), to one or more location(s) that is/are upstream from the heat exchanger tube (201) and
[A]
- feeding a second amount (M2) of the sulphur-containing reagent (R) to the flue gas fraction (FG), the primary first channel (111) and/or the furnace (130), wherein
- a ratio (M1/M2) of the first amount (M1) to the second amount (M2) is at least one third (1/3) or
[B]
- not feeding the sulphur-containing reagent (R) to any one of the flue gas fraction (FG), the primary first channel (111), or the furnace (130).

15. The method of any of the claims 9 to 14, wherein
- a temperature of an outer surface of the heat exchanger tube (201) is more than 450 °C, such as from 450 °C to 750 °C;
preferably also
- a temperature of an outer surface of a second heat exchanger tube of the second heat exchanger (410, 420) is less than 450 °C.

16. Method of any of the claims 9 to 15, comprising
[A]
- feeding oxygen-containing gas to a location that is arranged downstream from the particle separator (140) but not further downstream than the heat exchanger tube (201) for example to fluidize at least a part of the bed material fraction (BM) in a vicinity of the heat exchanger tube (201) AND/OR
[B]
- removing sulphur oxide (SOx) from the flue gas fraction (FG) in a wet scrubber comprised by the sulphur removal unit (500).

17. The method of any of the claims 9 to 16, wherein
- the fuel comprises a component derived from residue;
preferably,
- the fuel comprises biodegradable material and/or plastic material;
more preferably, the fuel comprises at least one of
- refuse derived fuel (RDF),
- recovered fuel (REF), and
- solid recovered fuel (SRF).

## Patentansprüche

1. Wirbelschichtkessel (100) vom Umwälztyp, umfassend
- einen Ofen (130), in dem eine Wirbelschicht, die eine Mischung (M) aus festem Bettmaterial und Gas umfasst, gebildet werden kann,
- einen Partikelabscheider (140), der dazu konfiguriert ist, aus der Mischung (M) eine Bettmaterialfraktion (BM) und eine Rauchgasfraktion (FG) abzutrennen,
- einen primären ersten Kanal (111), der dazu konfiguriert ist, die Mischung (M) von dem Ofen (130) zu dem Partikelabscheider (140) zu befördern,
- einen ersten Wärmetauscher (200), der ein Wärmetauscherrohr (201) umfasst, das dazu konfiguriert ist, Wärme aus zumindest einem Teil der Bettmaterialfraktion (BM) zurückzugewinnen und stromaufwärts von dem Ofen (130) angeordnet ist,
- einen primären zweiten Kanal (112), der so konfiguriert ist, dass er zumindest einen Teil der Bettmaterialfraktion (BM) vom Partikelabscheider (140) zum ersten Wärmetauscher (200) befördert, und
- einen primären dritten Kanal (113), der so konfiguriert ist, dass er zumindest einen Teil der Bettmaterialfraktion (BM) vom ersten Wärmetauscher (200) zum Ofen (130) befördert,
- Mittel (300) zum Zuführen eines schwefelhaltigen Reagenzes (R) zur Bettmaterialfraktion (BM) stromaufwärts vom Wärmetauscherrohr (201), **gekennzeichnet durch**
- eine Schwefelentfernungseinheit (500),
- einen Kanal (510), der dazu konfiguriert ist, die Rauchgasfraktion (FG) zur Schwefelentfernungseinheit (500) zu leiten,
- einen zweiten Wärmetauscher (410, 420), der dazu konfiguriert ist, Wärme aus der Rauchgasfraktion (FG) zurückzugewinnen, wobei der zweite Wärmetauscher (410, 420) in Strömungsrichtung der Rauchgasfraktion (FG) hinter dem Partikelabscheider (140) und vor der Schwefelentfernungseinheit (500) angeordnet ist, und
- eine Rohrleitung (412), die dazu konfiguriert ist, Wärmeaustauschmedium vom zweiten Wärmetauscher (410, 420) zum ersten Wärmetauscher (200) zu leiten.

2. Wirbelschichtkessel (100) nach Anspruch 1, wobei
- das Mittel (300) zum Zuführen eines schwefelhaltigen Reagens (R) so konfiguriert ist, dass es das schwefelhaltige Reagens (R) einer Zuführstelle (FL) zuführt, wobei
- die Zuführstelle (FL)
o in einem unteren Teil des Partikelabscheiders (140) oder
o in einer Strömungsrichtung der Bettmaterialfraktion (BM), stromabwärts des Partikelabscheiders (140) und stromaufwärts des Wärmetauscherrohrs (201);
angeordnet ist
vorzugsweise,
- der Wirbelschichtkessel (100) eine Aufteilungskammer (205) umfasst, die dazu ausgebildet ist, die Bettmaterialfraktion in einen ersten und einen zweiten Teil aufzuteilen,
- das Wärmetauscherrohr (201) dazu ausgebildet ist, Wärme aus dem ersten Teil der Bettmaterialfraktion zurückzugewinnen, und
- das Mittel (300) zum Zuführen eines schwefelhaltigen Reagens (R) dazu ausgebildet ist, das schwefelhaltige Reagens (R) dem ersten Teil der Bettmaterialfraktion zuzuführen.

3. Wirbelschichtkessel (100) nach Anspruch 1 oder 2, umfassend
- eine erste Kammer (210) und eine zweite Kammer (220), wobei
- die erste Kammer (210) in einer Strömungsrichtung der Bettmaterialfraktion (BM) stromabwärts des Partikelabscheiders (140) angeordnet ist,
- die zweite Kammer (220) in einer Strömungsrichtung der Bettmaterialfraktion (BM) stromabwärts der ersten Kammer (210) und stromaufwärts des Ofens (130) angeordnet ist,
- die Bettmaterialfraktion (BM) so konfiguriert ist, dass sie die erste Kammer (210) auf einer ersten Ebene betritt und die erste Kammer (210) auf einer zweiten Ebene verlässt,
- die zweite Ebene niedriger als die erste Ebene angeordnet ist,
- die Bettmaterialfraktion (BM) so konfiguriert ist, dass sie die zweite Kammer (220) auf einer dritten Ebene betritt und die zweite Kammer (220) auf einer vierten Ebene verlässt, und
- die vierte Ebene höher als die dritte Ebene angeordnet ist:
vorzugsweise
- die zweite Kammer (220) in Strömungsrichtung der Bettmaterialfraktion (BM) vor dem Wärmetauscherrohr (201) angeordnet ist;
weiter bevorzugt
- eine/die Zuführstelle (FL)
∘ in der zweiten Kammer (220) oder
∘ in Strömungsrichtung der Bettmaterialfraktion (BM) hinter der zweiten Kammer (220) angeordnet ist.

4. Wirbelschichtkessel (100) nach einem der Ansprüche 1 bis 3, wobei
- das Mittel (300) zum Zuführen des schwefelhaltigen Reagens (R) so konfiguriert ist, dass es das schwefelhaltige Reagens (R) in Form von festem Granulat und/oder Pulver zuführt;
vorzugsweise,
- das Mittel (300) zum Zuführen des schwefelhaltigen Reagens (R) so konfiguriert ist, dass es das schwefelhaltige Reagens (R) in Form von festem Granulat und/oder Pulver unter Verwendung eines Trägergases, z.B. Luft, zuführt, mit dem das feste Granulat und/oder Pulver zu einer/der Zuführstelle (FL) fließt.

5. Wirbelschichtkessel (100) nach einem der Ansprüche 1 bis 4, umfassend
- einen weiteren Wärmetauscher (430), der so konfiguriert ist, dass er Wärme aus der Mischung (M) zurückgewinnt, wobei
- die Rohrleitung (412) so konfiguriert ist, dass sie ein Wärmeaustauschmedium, wie etwa Dampf, von dem anderen Wärmetauscher (430) zu dem ersten Wärmetauscher (200) befördert;
vorzugsweise,
- der Wirbelschichtkessel (100) keine Mittel zum Zuführen des schwefelhaltigen Reagenzes (R) oder eines anderen schwefelhaltigen Reagenzes zu einem der Rauchgasfraktionen (FG), dem primären ersten Kanal (111) oder dem Ofen (130) umfasst.

6. Wirbelschichtkessel (100) nach Anspruch 5, wobei
- die Rohrleitung (412) so konfiguriert ist, dass sie Wärmeträgermedium vom zweiten Wärmetauscher (410, 420) über den anderen Wärmetauscher (430) zum ersten Wärmetauscher (200) befördert.

7. Wirbelschichtkessel (100) nach einem der Ansprüche 1 bis 6, wobei
- das Wärmetauscherrohr (201) Folgendes umfasst
o ein Innenrohr (201a),
o ein Außenrohr (201b), das das Innenrohr (201a) radial umgibt, und
o zwischen dem Innenrohr (201a) und dem Außenrohr (201b) angeordnetes wärmeisolierendes Material (201c); vorzugsweise
- eine Wärmeleitfähigkeit des wärmeisolierenden Materials (201c) von 1 W/mK bis 10 WimK bei 20 °C beträgt.

8. Wirbelschichtkessel (100) nach einem der Ansprüche 1 bis 7, umfassend
- ein erstes Abteil (230), wobei das Wärmetauscherrohr (201) in dem ersten Abteil (230) angeordnet ist, und
- Düsen (232) zum Verflüssigen der Bettmaterialfraktion (BM) in dem ersten Abteil (230), wobei
- das Mittel (300) zum Zuführen des schwefelhaltigen Reagens (R) zu der Bettmaterialfraktion (BM) so konfiguriert ist, dass es das schwefelhaltige Reagens (R) stromaufwärts von dem ersten Abteil (230) oder in das erste Abteil (230) zuführt.

9. Verfahren zum Betreiben eines umwälzenden Wirbelschichtkessels (100), wobei das Verfahren Folgendes umfasst
- Zuführen von Luft, Brennstoff und Bettmaterial zu einem Ofen (130) des umwälzenden Wirbelschichtkessels (100),
- Verbrennen des Brennstoffs im Ofen (130) und dadurch Erzeugen von Rauchgas,
- Fördern einer Mischung (M), die das Rauchgas und das Bettmaterial umfasst, vom Ofen (130) zu einem Partikelabscheider (140),
- Abtrennen einer Bettmaterialfraktion (BM) und einer Rauchgasfraktion (FG) aus der Mischung (M) mit dem Partikelabscheider (140),
- Fördern von mindestens einem Teil der Bettmaterialfraktion (BM) vom Partikelabscheider zu einem ersten Wärmetauscher (200), der ein Wärmetauscherrohr (201) umfasst, das stromaufwärts vom Ofen (130) angeordnet ist,
- Rückgewinnen von Wärme aus mindestens einem Teil der Bettmaterialfraktion (BM) mit dem Wärmetauscherrohr (201), und
- Fördern eines Teils der Bettmaterialfraktion (BM) oder der gesamten Bettmaterialfraktion (BM) vom Wärmetauscherrohr (201) zum Ofen (130), und
- Zuführen eines schwefelhaltigen Reagenzes (R) zur Bettmaterialfraktion (BM) stromaufwärts vom Wärmetauscherrohr (201),
**dadurch gekennzeichnet, dass** der umwälzende Wirbelschichtkessel (100) Folgendes umfasst
- eine Schwefelentfernungseinheit (500),
- einen Kanal (510), der dazu konfiguriert ist, die Rauchgasfraktion (FG) zur Schwefelentfernungseinheit (500) zu leiten,
- einen zweiten Wärmetauscher (410, 420), der dazu konfiguriert ist, Wärme aus der Rauchgasfraktion (FG) zurückzugewinnen, wobei der zweite Wärmetauscher (410, 420) in Strömungsrichtung der Rauchgasfraktion (FG) hinter dem Partikelabscheider (140) und vor der Schwefelentfernungseinheit (500) angeordnet ist, und
- eine Rohrleitung (412), die dazu konfiguriert ist, Wärmeaustauschmedium vom zweiten Wärmetauscher (410, 420) zum ersten Wärmetauscher (200) zu leiten.

10. Verfahren nach Anspruch 9, umfassend
- Zuführen des schwefelhaltigen Reagenzes (R) zu einer Zuführstelle (FL), die
o in einem unteren Teil des Partikelabscheiders (140) oder
o in einer Strömungsrichtung der Bettmaterialfraktion (BM), stromabwärts des Partikelabscheiders (140) und stromaufwärts des Wärmetauscherrohres (201) angeordnet ist.

11. Verfahren nach Anspruch 9 oder 10, wobei
- die Bettmaterialfraktion (BM) in eine erste Kammer (210) des umwälzenden Wirbelschichtkessels (100) auf einem ersten Niveau eintritt und die erste Kammer (210) auf einem zweiten Niveau verlässt,
- das zweite Niveau niedriger angeordnet ist als das erste Niveau,
- die Bettmaterialfraktion (BM) in eine zweite Kammer (220) des umwälzenden Wirbelschichtkessels (100) auf einem dritten Niveau eintritt und die zweite Kammer (220) auf einem vierten Niveau verlässt,
- das vierte Niveau höher angeordnet ist als das dritte Niveau,
- die erste Kammer (210) in einer Strömungsrichtung der Bettmaterialfraktion (BM) stromabwärts des Partikelabscheiders (140) angeordnet ist, und
- die zweite Kammer (220) in einer Strömungsrichtung der Bettmaterialfraktion (BM) stromabwärts der ersten Kammer (210) und stromaufwärts des Ofens (130) angeordnet ist;
vorzugsweise
- die zweite Kammer (220) des Wirbelschichtkessels stromaufwärts des Wärmetauscherrohrs (201) angeordnet ist;
noch bevorzugter das Verfahren
- das Zuführen des schwefelhaltigen Reagenzes (R) zu einer/der Zuführstelle (FL) umfasst, die
o in der zweiten Kammer (220) oder
o in einer Strömungsrichtung der Bettmaterialfraktion (BM) stromabwärts der zweiten Kammer (220) angeordnet ist.

12. Verfahren nach einem der Ansprüche 9 bis 11, wobei
- das schwefelhaltige Reagenz (R) mindestens eines der folgenden umfasst:
o elementaren Schwefel (S) und
o ein Sulfat, das kein Eisensulfat ist, z. B. Diethylsulfat ((C₂H₅)₂SO₄) oder Dimethylsulfat ((CH₃)₂SO₄):
vorzugsweise,
- das schwefelhaltige Reagenz (R) festen elementaren Schwefel (S), z.B. in Form von Granulat und/oder Pulver umfasst.

13. Verfahren nach einem der Ansprüche 9 bis 12, umfassend
[A]
- Aufteilen der Bettmaterialfraktion (BM) in einen ersten und einen zweiten Teil,
- Leiten des ersten Teils der Bettmaterialfraktion zum Wärmetauscherrohr (201),
- Leiten des zweiten Teils der Bettmaterialfraktion (BM) durch einen Bypass (206), so dass der zweite Teil der Bettmaterialfraktion (BM) nicht mit dem Wärmetauscherrohr (201) in Kontakt kommt,
- Zuführen des schwefelhaltigen Reagens (R) zum ersten Teil der Bettmaterialfraktion UND/ODER
[B]
- Zuführen des schwefelhaltigen Reagens (R) nur zur Bettmaterialfraktion (BM) und nur zu einer oder mehreren Stellen, die sich stromaufwärts vom Wärmetauscherrohr (201) befinden.

14. Verfahren nach einem der Ansprüche 9 bis 13, umfassend
- Zuführen einer ersten Menge (M1) des schwefelhaltigen Reagens (R) zur Bettmaterialfraktion (BM) an eine oder mehrere Stellen, die sich stromaufwärts vom Wärmetauscherrohr (201) befinden und
[A]
- Zuführen einer zweiten Menge (M2) des schwefelhaltigen Reagens (R) zur Rauchgasfraktion (FG), dem primären ersten Kanal (111) und/oder dem Ofen (130), wobei
- ein Verhältnis (M1/M2) der ersten Menge (M1) zur zweiten Menge (M2) mindestens ein Drittel (1/3) beträgt, oder
[B]
- Nichtzuführen des schwefelhaltigen Reagens (R) zu einer der Rauchgasfraktionen (FG), dem primären ersten Kanal (111) oder dem Ofen (130).

15. Verfahren nach einem der Ansprüche 9 bis 14, wobei
- eine Temperatur einer Außenfläche des Wärmetauscherrohrs (201) über 450 °C liegt, beispielsweise zwischen 450 °C und 750 °C;
vorzugsweise auch
- eine Temperatur einer Außenfläche eines zweiten Wärmetauscherrohrs des zweiten Wärmetauschers (410, 420) unter 450 °C liegt.

16. Verfahren nach einem der Ansprüche 9 bis 15, umfassend
[A]
- Zuführen von sauerstoffhaltigem Gas zu einer Stelle, die stromabwärts des Partikelabscheiders (140), aber nicht weiter stromabwärts als das Wärmetauscherrohr (201) angeordnet ist, beispielsweise um zumindest einen Teil der Bettmaterialfraktion (BM) in der Nähe des Wärmetauscherrohrs (201) zu fluidisieren UND/ODER
[B]
- Entfernen von Schwefeloxid (SOx) aus der Rauchgasfraktion (FG) in einem Nasswäscher, der von der Schwefelentfernungseinheit (500) umfasst wird.

17. Verfahren nach einem der Ansprüche 9 bis 16, wobei
- der Brennstoff eine aus Rückständen gewonnene Komponente umfasst;
Vorzugsweise,
- der Brennstoff biologisch abbaubares Material und/oder Kunststoffmaterial umfasst;
noch bevorzugter der Brennstoff mindestens eines der folgenden umfasst
- aus Abfall gewonnener Brennstoff (RDF),
- wiedergewonnener Brennstoff (REF), und
- fester wiedergewonnener Brennstoff (SRF).

## Revendications

1. Chaudière à lit fluidisé (100) du type circulant, comprenant
- un four (130), dans lequel un lit fluidisé comprenant un mélange (M) de matériau de lit solide et de gaz est configuré pour se former,
- un séparateur de particules (140) configuré pour séparer du mélange (M) une fraction de matériau de lit solide (BM) et une fraction de gaz de combustion (FG),
- un premier canal primaire (111) configuré pour transporter le mélange (M) du four (130) au séparateur de particules (140),
- un premier échangeur de chaleur (200) comprenant un tube d'échangeur de chaleur (201) configuré pour récupérer de la chaleur d'au moins une partie de la fraction de matériau de lit (BM) et agencé en amont du four (130),
- un deuxième canal primaire (112) configuré pour transporter au moins la partie de la fraction de matériau de lit (BM) du séparateur de particules (140) au premier échangeur de chaleur (200), et
- un troisième canal primaire (113) configuré pour transporter au moins une partie de la fraction de matériau de lit (BM) du premier échangeur de chaleur (200) au four (130),
- un moyen (300) pour acheminer un réactif contenant du soufre (R) vers la fraction de matériau de lit (BM) en amont du tube d'échangeur de chaleur (201), **caractérisée par**
- une unité d'élimination du soufre (500),
- un canal (510) configuré pour transporter la fraction de gaz de combustion (FG) vers l'unité d'élimination du soufre (500),
- un second échangeur de chaleur (410, 420) configuré pour récupérer de la chaleur de la fraction de gaz de combustion (FG), le second échangeur de chaleur (410, 420) étant agencé en aval du séparateur de particules (140) et en amont de l'unité d'élimination du soufre (500) dans la direction d'écoulement de la fraction de gaz de combustion (FG), et
- un pipeline (412) configuré pour transporter un milieu d'échange de chaleur du second échangeur de chaleur (410, 420) au premier échangeur de chaleur (200).

2. Chaudière à lit fluidisé (100) selon la revendication 1, dans laquelle
- le moyen (300) pour acheminer un réactif contenant du soufre (R) est configuré pour acheminer le réactif contenant du soufre (R) vers un emplacement d'alimentation (FL), dans laquelle
- l'emplacement d'alimentation (FL) est agencé
• dans une partie inférieure du séparateur de particules (140) ou
• dans une direction d'un écoulement de la fraction de matériau de lit (BM), en aval du séparateur de particules (140) et en amont du tube d'échangeur de chaleur (201) ; de préférence,
- la chaudière à lit fluidisé (100) comprend une chambre de séparation (205) configurée pour diviser la fraction de matériau de lit en une première partie et une seconde partie,
- le tube d'échangeur de chaleur (201) est configuré pour récupérer de la chaleur de la première partie de la fraction de matériau de lit, et
- le moyen (300) pour acheminer un réactif contenant du soufre (R) est configuré pour acheminer le réactif contenant du soufre (R) vers la première partie de la fraction de matériau de lit.

3. Chaudière à lit fluidisé (100) selon la revendication 1 ou 2, comprenant
- une première chambre (210) et une seconde chambre (220), dans laquelle
- la première chambre (210) est agencée en aval du séparateur de particules (140) dans une direction d'un écoulement de la fraction de matériau de lit (BM),
- la seconde chambre (220) est agencée en aval de la première chambre (210) et en amont du four (130) dans une direction d'un écoulement de la fraction de matériau de lit (BM),
- la fraction de matériau de lit (BM) est configurée pour entrer dans la première chambre (210) à un premier niveau et sortir de la première chambre (210) à un deuxième niveau,
- le deuxième niveau est agencé plus bas que le premier niveau,
- la fraction de matériau de lit (BM) est configurée pour entrer dans la seconde chambre (220) à un troisième niveau et sortir de la seconde chambre (220) à un quatrième niveau, et
- le quatrième niveau est agencé plus haut que le troisième niveau ;
de préférence,
- la seconde chambre (220) est agencée en amont du tube d'échangeur de chaleur (201) dans la direction d'un écoulement de la fraction de matériau de lit (BM) ; plus préférablement,
- un/l'emplacement d'alimentation (FL) est agencé
• dans la seconde chambre (220) ou
• dans une direction d'un écoulement de la fraction de matériau de lit (BM), en aval de la seconde chambre (220).

4. Chaudière à lit fluidisé (100) selon l'une quelconque des revendications 1 à 3, dans laquelle
- le moyen (300) pour acheminer le réactif contenant du soufre (R) est configuré pour acheminer le réactif contenant du soufre (R) sous une forme de granulés solides et/ou de poudre ;
de préférence,
- le moyen (300) pour acheminer le réactif contenant du soufre (R) est configuré pour acheminer le réactif contenant du soufre (R) sous une forme de granulés solides et/ou de poudre à l'aide d'un gaz porteur, par exemple de l'air, avec lequel les granulés solides et/ou la poudre s'écoulent vers un/l'emplacement d'alimentation (FL).

5. Chaudière à lit fluidisé (100) selon l'une quelconque des revendications 1 à 4, comprenant
- un autre échangeur de chaleur (430) configuré pour récupérer de la chaleur du mélange (M), dans laquelle
- le pipeline (412) est configuré pour transporter un milieu d'échange de chaleur, tel que de la vapeur, de l'autre échangeur de chaleur (430) au premier échangeur de chaleur (200) ;
de préférence,
- la chaudière à lit fluidisé (100) ne comprend pas de moyens pour acheminer le réactif contenant du soufre (R) ou un autre réactif contenant du soufre vers l'un quelconque de la fraction de gaz de combustion (FG), du premier canal primaire (111) ou du four (130).

6. Chaudière à lit fluidisé (100) selon la revendication 5, dans laquelle
- le pipeline (412) est configuré pour transporter un milieu de transfert de chaleur du second échangeur de chaleur (410, 420) au premier échangeur de chaleur (200) via l'autre échangeur de chaleur (430).

7. Chaudière à lit fluidisé (100) selon l'une quelconque des revendications 1 à 6, dans laquelle
- le tube d'échangeur de chaleur (201) comprend
• un tube interne (201a),
• un tube externe (201b) entourant radialement le tube interne (201a) et
• un matériau thermiquement isolant (201c) agencé entre le tube interne (201a) et le tube externe (201b) ; de préférence,
- une conductivité thermique du matériau thermiquement isolant (201c) est de 1 W/mK à 10 W/mK à 20 °C.

8. Chaudière à lit fluidisé (100) selon l'une quelconque des revendications 1 à 7, comprenant
- un premier compartiment (230), le tube d'échangeur de chaleur (201) étant agencé dans le premier compartiment (230) et
- des buses (232) pour fluidiser la fraction de matériau de lit (BM) dans le premier compartiment (230), dans laquelle
- le moyen (300) pour acheminer le réactif contenant du soufre (R) vers la fraction de matériau de lit (BM) est configuré pour acheminer le réactif contenant du soufre (R) en amont du premier compartiment (230) ou dans le premier compartiment (230).

9. Procédé de fonctionnement d'une chaudière à lit fluidisé circulant (100), le procédé comprenant
- l'acheminement d'air, de combustible et de matériau de lit vers un four (130) de la chaudière à lit fluidisé circulant (100),
- le brûlage du combustible dans le four (130) produisant ainsi du gaz de combustion,
- le transport d'un mélange (M) comprenant le gaz de combustion et le matériau de lit du four (130) à un séparateur de particules (140),
- la séparation du mélange (M) d'une fraction de matériau de lit (BM) et d'une fraction de gaz de combustion (FG) avec le séparateur de particules (140),
- le transport d'au moins une partie de la fraction de matériau de lit (BM) du séparateur de particules à un premier échangeur de chaleur (200) comprenant un tube d'échangeur de chaleur (201) agencé en amont du four (130),
- la récupération de chaleur de l'au moins une partie de la fraction de matériau de lit (BM) avec le tube d'échangeur de chaleur (201), et
- le transport d'une partie de la fraction de matériau de lit (BM) ou de la totalité de la fraction de matériau de lit (BM) du tube d'échangeur de chaleur (201) au four (130), et
- l'acheminement d'un réactif contenant du soufre (R) vers la fraction de matériau de lit (BM) en amont du tube d'échangeur de chaleur (201),
**caractérisé en ce que** la chaudière à lit fluidisé circulant (100) comprend
- une unité d'élimination du soufre (500),
- un canal (510) configuré pour transporter la fraction de gaz de combustion (FG) vers l'unité d'élimination du soufre (500),
- un second échangeur de chaleur (410, 420) configuré pour récupérer de la chaleur de la fraction de gaz de combustion (FG), le second échangeur de chaleur (410, 420) étant agencé en aval du séparateur de particules (140) et en amont de l'unité d'élimination du soufre (500) dans la direction d'écoulement de la fraction de gaz de combustion (FG), et
- un pipeline (412) configuré pour transporter un milieu d'échange de chaleur du second échangeur de chaleur (410, 420) au premier échangeur de chaleur (200).

10. Procédé selon la revendication 9, comprenant
- l'acheminement du réactif contenant du soufre (R) vers un emplacement d'alimentation (FL) qui est agencé
• dans une partie inférieure du séparateur de particules (140) ou
• dans une direction d'un écoulement de la fraction de matériau de lit (BM), en aval du séparateur de particules (140) et en amont du tube d'échangeur de chaleur (201).

11. Procédé selon la revendication 9 ou 10, dans lequel
- la fraction de matériau de lit (BM) entre dans une première chambre (210) de la chaudière à lit fluidisé circulant (100) à un premier niveau et sort de la première chambre (210) à un deuxième niveau,
- le deuxième niveau est agencé plus bas que le premier niveau,
- la fraction de matériau de lit (BM) entre dans une seconde chambre (220) de la chaudière à lit fluidisé circulant (100) à un troisième niveau et sort de la seconde chambre (220) à un quatrième niveau,
- le quatrième niveau est agencé plus haut que le troisième niveau,
- la première chambre (210) est agencée en aval du séparateur de particules (140) dans une direction d'un écoulement de la fraction de matériau de lit (BM), et
- la seconde chambre (220) est agencée en aval de la première chambre (210) et en amont du four (130) dans une direction d'un écoulement de la fraction de matériau de lit (BM) ;
de préférence,
- la seconde chambre (220) de la chaudière à lit fluidisé est agencée en amont du tube d'échangeur de chaleur (201) ;
plus préférablement, le procédé comprend
- l'acheminement du réactif contenant du soufre (R) vers un/l'emplacement d'alimentation (FL) qui est agencé
• dans la seconde chambre (220) ou
• dans une direction d'un écoulement de la fraction de matériau de lit (BM), en aval de la seconde chambre (220).

12. Procédé selon l'une quelconque des revendications 9 à 11, dans lequel
- le réactif contenant du soufre (R) comprend au moins l'un des éléments suivants
• du soufre élémentaire (S) et
• un sulfate qui n'est pas du sulfate ferrique, par exemple le sulfate de diéthyle ((C₂H₅)₂SO₄) ou le sulfate de diméthyle ((CH₃)₂SO₄) ;
e préférence,
- le réactif contenant du soufre (R) comprend du soufre élémentaire solide (S) par exemple sous forme de granulés et/ou de poudre.

13. Procédé selon l'une quelconque des revendications 9 à 12, comprenant
[A]
- la division de la fraction de matériau de lit (BM) en une première partie et une seconde partie,
- le guidage de la première partie de la fraction de matériau de lit vers le tube d'échangeur de chaleur (201),
- le guidage de la seconde partie de la fraction de matériau de lit (BM) à travers une dérivation (206) de sorte que la seconde partie de la fraction de matériau de lit (BM) n'entre pas en contact avec le tube d'échangeur de chaleur (201),
- l'acheminement du réactif contenant du soufre (R) vers la première partie de la fraction de matériau de lit ET/OU
[B]
- l'acheminement du réactif contenant du soufre (R) uniquement vers la fraction de matériau de lit (BM) et uniquement vers un ou plusieurs emplacements qui sont en amont du tube d'échangeur de chaleur (201).

14. Procédé selon l'une quelconque des revendications 9 à 13, comprenant
- l'acheminement d'une première quantité (M1) du réactif contenant du soufre (R) vers la fraction de matériau de lit (BM), vers un ou plusieurs emplacements qui sont en amont du tube d'échangeur de chaleur (201) et
[A]
- l'acheminement d'une seconde quantité (M2) du réactif contenant du soufre (R) vers la fraction de gaz de combustion (FG), le premier canal primaire (111) et/ou le four (130), dans lequel
- un rapport (M1/M2) de la première quantité (M1) à la seconde quantité (M2) est d'au moins un tiers (1/3) ou
[B]
- le non-acheminement du réactif contenant du soufre (R) vers l'un quelconque de la fraction de gaz de combustion (FG), du premier canal primaire (111) ou du four (130).

15. Procédé selon l'une quelconque des revendications 9 à 14, dans lequel
- une température d'une surface externe du tube d'échangeur de chaleur (201) est supérieure à 450 °C, par exemple de 450 °C à 750 °C ;
de préférence également
- une température d'une surface externe d'un second tube d'échangeur de chaleur du second échangeur de chaleur (410, 420) est inférieure à 450 °C.

16. Procédé selon l'une quelconque des revendications 9 à 15, comprenant
[A]
- l'acheminement d'un gaz contenant de l'oxygène vers un emplacement qui est agencé en aval du séparateur de particules (140) mais pas plus en aval que le tube d'échangeur de chaleur (201) par exemple pour fluidiser au moins une partie de la fraction de matériau de lit (BM) à proximité du tube d'échangeur de chaleur (201) ET/OU
[B]
- l'élimination de l'oxyde de soufre (SOx) de la fraction de gaz de combustion (FG) dans un épurateur humide constitué par l'unité d'élimination du soufre (500) .

17. Procédé selon l'une quelconque des revendications 9 à 16, dans lequel
- le combustible comprend un composant dérivé de résidus ;
de préférence,
- le combustible comprend un matériau biodégradable et/ou un matériau plastique ;
plus préférablement, le combustible comprend au moins l'un des éléments suivants
- du combustible dérivé des déchets (RDF),
- du combustible récupéré (REF), et
- du combustible solide de récupération (CSR).
